# EUROPEAN PATENT SPECIFICATION

(11) **EP 4 102 591 B1**
(45) Date of publication and mention of the grant of the patent: **04.12.2024**
(21) Application number: 21923592.6
(22) Date of filing: 22.04.2021
(51) Int. Cl.: H01M 10/0587, H01M 10/04, H01M 4/04, H01M 50/103, H01M 4/131, H01M 4/133, H01M 10/0525

(54) **ELECTRODE ASSEMBLY AND MANUFACTURING METHOD AND MANUFACTURING SYSTEM THEREFOR, BATTERY CELL, AND BATTERY**
ELEKTRODENANORDNUNG UND HERSTELLUNGSVERFAHREN UND HERSTELLUNGSSYSTEM DAFÜR, BATTERIEZELLE UND BATTERIE
ENSEMBLE ÉLECTRODE, PROCÉDÉ DE FABRICATION ET SYSTÈME DE FABRICATION CORRESPONDANTS, ÉLÉMENT DE BATTERIE ET BATTERIE

(43) Date of publication of application: 14.12.2022
(60) Divisional application: 24207303.9
(73) Proprietor: Contemporary Amperex Technology (Hong Kong) Limited, Central, Central And Western District (HK)
(72) Inventor: ZHENG, Yi, Ningde City Fujian 352100 (CN); KANG, Haiyang, Ningde City Fujian 352100 (CN); XU, Hu, Ningde City Fujian 352100 (CN); SUN, Chengdong, Ningde City Fujian 352100 (CN)
(74) Representative: Rowlands, Stuart Michael
(86) International application number: PCT/CN2021/088914
(87) International publication number: WO 2022/222092

(56) References cited:
- WO-A1-2020/226320
- CN-A- 105 958 124
- CN-A- 105 958 124
- CN-A- 111 540 881
- CN-U- 205 564 871
- JP-A- 2011 192 505
- JP-A- 2021 051 881
- US-A1- 2002 192 558
- US-A1- 2020 313 171

## Description

### TECHNICAL FIELD

The application relates to the technical field of batteries, and particularly relates to an electrode assembly and a manufacturing method and manufacturing system therefor, a battery cell and a battery.

### BACKGROUND ART

Rechargeable battery cells, which can be called secondary battery cells, refer to battery cells that can be recharged to activate active materials and continue to be used after the battery cells are discharged. Rechargeable battery cells are widely used in electronic devices such as mobile phones, laptops, battery cars, electric vehicles, electric aircrafts, electric boats, electric toy cars, electric toy boats, electric toy planes, electric tools, etc.

For general electrode assemblies, the arrangement of active materials in pole pieces is unreasonable and less economical.
JP 2021051881A discloses an electrode assembly 12, wherein in the electrode assembly 12, a first electrode 20 is wound so that a first surface 22a having a first active material layer 24 existing thereon is located on an inner peripheral side, and a second surface 22b having a second active material layer 25 existing thereon is located on an outer peripheral side. The electrode assembly 12 includes a central laminate portion 12a in which the first electrode 20 is laminated flatly, and a first end side laminate portion 12b and a second end side laminate portion 12c in which the first electrode 20 is laminated in a curved state. The thickness of the second active material layer 25 of the first electrode 20 is constant in a longitudinal direction of a first main body portion 22. The second active material layer 25 alternately has high-density portions 25a and low-density portions 25b in the longitudinal direction of the first main body portion 22, the low-density portions 25b having a lower active material density in the second active material layer 25 than the high-density portion 25a. The high-density portion 25a constitutes the central laminated portion 12a, and the low-density portion 25b constitutes the first end side laminated portion 12b or the second end side laminated portion 12c.
US20020192258A1 discloses a method for the formation of unique poly(vinyl alcohol) hydrogels, articles that are made from such hydrogels, unique odor-providing pest repellent compositions and their uses to repel pests.
CN 105958124A discloses a lithium ion battery comprising a negative plate, a positive plate, and a flat-shaped cell which is formed by winding a separator which is arranged between the negative plate and the positive plate; the positive plate is coated with a positive electrode material A1 at the corner of the cell; the plane layer of the cell is coated with a positive electrode material B1; the gram volume of the positive electrode material A1 is higher than that of the positive electrode material B1; and/or the negative plate is coated with a negative electrode material A2 at the corner of the cell; the plane layer of the cell is coated with a negative electrode material B2; and the gram volume of the negative electrode material A2 is lower than that of the negative electrode material B2.
US 2020313171A1 relates to an electrode and an electrochemical device including the electrode. The anode of the US 2020313171A1 includes a first anode region and a second anode region, wherein the unit area capacity CsA2 of the second anode region is greater than or equal to the unit area capacity CsA1 of the first anode region. The cathode of US 2020313171A1 includes a first cathode region and a second cathode region, wherein the unit area capacity CsC2 of the second cathode region is less than or equal to 98% of the unit area capacity CsC 1 of the first cathode region.

### SUMMARY OF THE INVENTION

The application provides an electrode assembly according to claim 1, a manufacturing method according to claim 14 and a manufacturing system therefor according to claim 15, a battery cell according to claim 11, a battery according to claim 12 and an electric device according to claim 13 to solve the problem of unreasonable arrangement of active materials in pole pieces. Other aspects of the invention can be found in the dependent claims.

In a first aspect, an embodiment of the application provides an electrode assembly including a negative pole piece and a positive pole piece, wherethe negative pole piece and the positive pole piece are wound in a winding direction to form a winding structure including a bent area and a straight area connected to the bent area. Both the negative pole piece and the positive pole piece include a plurality of bent portions located in the bent area and a plurality of straight portions located in the straight area. At least one of the bent portions of the positive pole piece is a first bent portion, and at least one of the straight portions of the positive pole piece is a first straight portion connected to the first bent portion, the capacity of an active material per unit area inside the first bent portion is lower than that of an active material per unit area inside the first straight portion; and/or at least one of the bent portions of the negative pole piece is a second bent portion, and at least one of the straight portions of the negative pole piece is a second straight portion connected to the second bent portion, the capacity of an active material per unit area outside the second bent portion is higher than that of an active material per unit area outside the second straight portion.

In the above solution, if the capacity of the active material per unit area inside the first bent portion is lower than that of the active material per unit area inside the first straight portion, a situation that there is excessive active material inside the first bent portion is not likely to occur, which allows the arrangement of active material in the positive pole piece more reasonable and reduces the risk of lithium plating. If the capacity of the active material per unit area outside the second bent portion is higher than that of the active material per unit area outside the second straight portion, a situation that there is insufficient active material outside the second bent portion is not likely to occur, and the risk of lithium plating is reduced. The electrode assembly with such structure has a more reasonable arrangement of active materials in pole pieces, which is more economical and reduces the risk of lithium plating.

In some embodiments, at least one of the bent portions of the positive pole piece is the first bent portion, at least one of the bent portions of the negative pole piece is the second bent portion, and the first bent portion adjacent to the second bent portion is arranged outside the second bent portion.

In the above solution, when the capacity of the active material per unit area inside the first straight portion and the capacity of the active material per unit area outside the second straight portion meet design requirements, the capacity of the active material per unit area inside the first bent portion is lower than that of the active material per unit area inside the first straight portion, and the capacity of the active material per unit area outside the second bent portion is higher than that of the active material per unit area outside the second straight portion, such that the CB value of the active material outside the second bent portion can be increased, thus reducing the occurrence of lithium plating.

In some embodiments, at least one of the bent portions of the positive pole piece is the first bent portion. A bent portion adjacent to the first bent portion of the negative pole piece is a third bent portion, and at least one of the straight portions of the negative pole piece is a third straight portion connected to the third bent portion. The capacity of an active material per unit area outside the third bent portion is equal to that of an active material outside the third straight portion. In this way, the manufacturing process of the negative pole piece can be simplified.

In some embodiments, at least one of the bent portions of the negative pole piece is the second bent portion. A bent portion adjacent to the second bent portion of the positive pole piece is a fourth bent portion, and at least one of the straight portions of the positive pole piece is a fourth straight portion connected to the fourth bent portion. The capacity of an active material per unit area inside the fourth bent portion is equal to that of an active material per unit area inside the fourth straight portion. In this way, the manufacturing process of the positive pole piece can be simplified.

In some embodiments, the first bent portion includes a first current collecting portion, a first internal active material portion arranged inside the first current collecting portion and a first conductive portion connected between the first current collecting portion and the first internal active material portion. According to the embodiments of the application, the capacity of the active material per unit area inside the first bent portion is reduced by arranging the first conductive portion.

In some embodiments, the first straight portion includes a second current collecting portion and a second internal active material portion arranged inside the second current collecting portion. The thickness of the second internal active material portion is greater than that of the first internal active material portion, such that the capacity of the active material per unit area inside the first bent portion is lower than that of the active material per unit area inside the first straight portion.

In some embodiments, the first straight portion further includes a third internal active material portion and a second conductive portion, the third internal active material portion is arranged inside the second current collecting portion, and the second conductive portion is connected between the second current collecting portion and the third internal active material portion. The second conductive portion is connected between the first conductive portion and the second internal active material portion, and the third internal active material portion is connected between the first internal active material portion and the second internal active material portion.

In some embodiments, the first conductive portion contains an active material. The gram capacity of the active material of the first conductive portion is lower than that of the active material of the first internal active material portion. In the application, the active material with lower gram capacity is added to the first conductive portion to reduce the capacity of the active material per unit area inside the first bent portion, such that the capacity of the active material per unit area inside the first bent portion is lower than that of the active material per unit area inside the first straight portion.

In some embodiments, the weight ratio of the active material of the first conductive portion to the first conductive portion is less than that of the active material of the first internal active material portion to the first internal active material portion to reduce the capacity of the active material per unit area inside the first bent portion, such that the capacity of the active material per unit area inside the first bent portion is lower than that of the active material per unit area inside the first straight portion.

In some embodiments, the second bent portion includes a third current collecting portion and a first external active material portion arranged outside the third current collecting portion, and the second straight portion includes a fourth current collecting portion and a second external active material portion arranged outside the fourth current collecting portion.

In some embodiments, the thickness of the first external active material portion is greater than that of the second external active material portion, such that the capacity of the active material per unit area outside the second bent portion is higher than that of the active material per unit area outside the second straight portion.

In some embodiments, the gram capacity of an active material in the first external active material portion is higher than that of an active material in the second external active material portion.

In some embodiments, the weight ratio of the active material of the first external active material portion to the first external active material portion is greater than that of the active material of the second external active material portion to the second external active material portion, which allows the capacity of the active material per unit area of the first external active material portion to be higher than that of the active material per unit area in the second external active material portion, such that the capacity of the active material per unit area outside the second bent portion is higher than that of the active material per unit area outside the second straight portion.

In some embodiments, the second bent portion includes a third conductive portion connected between the third current collecting portion and the first external active material portion, and the third conductive portion contains an active material. The gram capacity of the active material of the third conductive portion is higher than that of the active material of the first external active material portion; or the weight ratio of the active material of the third conductive portion to the third conductive portion is greater than that of the active material of the first external active material portion to the first external active material portion. According to the embodiments of the application, the capacity of the active material per unit area outside the second bent portion is increased by arranging the third conductive portion.

In some embodiments, the second straight portion further includes a third external active material portion and a fourth conductive portion, the third external active material portion is disposed outside the fourth current collecting portion, and the fourth conductive portion being connected between the fourth current collecting portion and the third external active material portion. The fourth conductive portion is connected between the third conductive portion and the second external active material portion, and the third external active material portion is connected between the first external active material portion and the second external active material portion.

In some embodiments, at least one of the innermost bent portions of the positive pole piece is the first bent portion. Since the capacity of the active material per unit area inside the first bent portion is lower than that of the active material per unit area inside the first straight portion, which is equivalent to reducing the capacity of the active material per unit area inside the first bent portion, the risk of lithium plating at the bent portion inside the first bent portion of the negative pole piece can be reduced even if the active material outside the bent portion inside the first bent portion sheds.

In some embodiments, at least one of the innermost bent portions of the negative pole piece is the second bent portion. Since the capacity of the active material per unit area outside the second bent portion is higher than that of the active material per unit area outside the second straight portion, which is equivalent to increasing the capacity of the active material per unit area outside the second bent portion, i.e., increasing the CB value of the active material outside the second bent portion, requirements of the active material outside the second bent portion for the CB value can be satisfied even if the active material outside the second bent portion sheds during bending, thereby reducing the risk of lithium plating.

In a second aspect, an embodiment of the application provides a battery cell, including a case and the electrode assembly according to any one of the embodiments of the first aspect, the electrode assembly is accommodated in the case.

In a third aspect, an embodiment of the application provides a battery, including a box and the battery cell according to any one of the embodiments of the second aspect, the battery cell is accommodated in the box.

In a fourth aspect, an embodiment of the application provides an electric device, including the battery according to any one of the embodiments of the third aspect, the battery is configured to provide electrical energy.

In a fifth aspect, an embodiment of the application provides a method for manufacturing an electrode assembly, including: providing a negative pole piece; providing a positive pole piece; and winding the negative pole piece and the positive pole piece in a winding direction to form a winding structure. The winding structure includes a bent area and a straight area connected to the bent area. Both the negative pole piece and the positive pole piece include a plurality of bent portions located in the bent area and a plurality of straight portions located in the straight area. At least one of the bent portions of the positive pole piece is a first bent portion, and at least one of the straight portions of the positive pole piece is a first straight portion connected to the first bent portion, the capacity of an active material per unit area inside the first bent portion is lower than that of an active material per unit area inside the first straight portion; and/or at least one of the bent portions of the negative pole piece is a second bent portion, and at least one of the straight portions of the negative pole piece is a second straight portion connected to the second bent portion, the capacity of an active material per unit area outside the second bent portion is higher than that of an active material per unit area outside the second straight portion.

In a sixth aspect, an embodiment of the application provides a system for manufacturing an electrode assembly, including: a first supply device, configured to supply a negative pole piece; a second supply device, configured to supply a positive pole piece; and an assembly device, configured to wind the negative pole piece and the positive pole piece in a winding direction to form a winding structure. The winding structure includes a bent area and a straight area connected to the bent area. Both the negative pole piece and the positive pole piece include a plurality of bent portions located in the bent area and a plurality of straight portions located in the straight area. At least one of the bent portions of the positive pole piece is a first bent portion, and at least one of the straight portions of the positive pole piece is a first straight portion connected to the first bent portion, the capacity of an active material per unit area inside the first bent portion is lower than that of an active material per unit area inside the first straight portion; and/or at least one of the bent portions of the negative pole piece is a second bent portion, and at least one of the straight portions of the negative pole piece is a second straight portion connected to the second bent portion, the capacity of an active material per unit area outside the second bent portion is higher than that of an active material per unit area outside the second straight portion.

### BRIEF DESCRIPTION OF THE DRAWINGS

In order to describe the technical solutions in the embodiments of the application more clearly, the accompanying drawings required for describing the embodiments are briefly described below. Obviously, the accompanying drawings in the following description show merely some embodiments of the present disclosure, and a person of ordinary skill in the art would also be able to derive other accompanying drawings from these accompanying drawings without creative efforts.
Fig. 1 is a structural schematic diagram of a vehicle provided in some embodiments of the application;
Fig. 2 is an exploded view of a battery provided in some embodiments of the application;
Fig. 3 is a schematic structural diagram of a battery module provided in some embodiments of the application.
Fig. 4 is an exploded view of a battery cell shown in Fig. 3;
Fig. 5 is a schematic structural diagram of an electrode assembly provided in some embodiments of the application.
Fig. 6 is an enlarged view of the electrode assembly shown in Fig. 5 at the square frame D.
Fig. 7 is a local sectional view of an electrode assembly provided in some embodiments of the application.
Fig. 8 is a local sectional view of an electrode assembly provided in some other embodiments of the application.
Fig. 9 is a local sectional view of an electrode assembly provided in some other embodiments of the application.
Fig. 10 is a local sectional view of an electrode assembly provided in some embodiments of the application.
Fig. 11 is a local sectional view of an electrode assembly provided in some other embodiments of the application.
Fig. 12 is a local sectional view of an electrode assembly provided in some other embodiments of the application.
Fig. 13 is a local sectional view of an electrode assembly provided in some other embodiments of the application.
Fig. 14 is a local sectional view of an electrode assembly provided in some other embodiments of the application.
Fig. 15 is a schematic flow chart of a method for manufacturing an electrode assembly provided in some embodiments of the application.
Fig. 16 is a schematic block diagram of a system for manufacturing an electrode assembly provided in some embodiments of the application.

In the drawings, the components are not drawn to actual scale.

### SPECIFIC EMBODIMENTS

To make the objectives, technical solutions, and advantages of the embodiments of the application clearer, the following will clearly describe the technical solutions in the embodiments of the application with reference to the accompanying drawings in the embodiments of the application. The described embodiments are some rather than all of the embodiments of the application. Based on the embodiments of the application, all other embodiments obtained by those of ordinary skill in the art without making creative efforts fall within the scope of protection of the application.

Unless otherwise defined, all technical and scientific terms used in the application have the same meanings as those commonly understood by those who belong to the technical field of the present application. In the application, the terms used in the specification of the application are merely for the purpose of describing specific embodiments, and are not intended to limit the application. The terms "including" and "having" and any variations thereof in the specification and claims of the application and the above accompanying drawings are intended to cover non-exclusive inclusion. The terms "first", "second", etc. in the specification and claims of the application or the above accompanying drawings are used to distinguish different objects, but not to describe a specific order or primary and secondary relationship.

Reference to an "embodiment" in the application means that a specific feature, structure or characteristic described in conjunction with an embodiment may be included in at least one embodiment of the application. The appearance of this phrase in various places in the specification does not necessarily mean the same embodiment, nor is it an independent or alternative embodiment mutually exclusive with other embodiments.

In the description of the application, it should be noted that, unless otherwise explicitly specified and defined, the terms "mounting", "connecting", "connection" and "attachment" should be understood in a broad sense, for example, they may be a fixed connection, a detachable connection, or an integrated connection; and may be a direct connection, or an indirect connection via an intermediate medium, or communication inside two elements. For those of ordinary skill in the art, the specific meanings of the above terms in the application could be understood according to specific circumstances.

As used herein, the term "and/or" is merely used to describe an associated relationship between associated objects and means three relationships, for example, A and/or B may mean A alone, A and B together, and B alone. In addition, the character "/" in the application generally indicates that the associated objects are an "or" relationship.

In the embodiments of the application, the same reference numerals refer to same components, and for the sake of brevity, detailed descriptions of the same components are omitted in different embodiments. It should be understood that a thickness, a length, a width and other dimensions of various components and an overall thickness, length, width and other dimensions of an integrated device shown in the accompanying drawings in the embodiments of the application are merely exemplary, and should not constitute any limitation on the application.

The term "plurality" in the application means two or more.

In the application, battery cells may include a lithium ion secondary battery cell, a lithium ion primary battery cell, a lithium-sulfur battery, a sodium lithium-ion battery cell, a sodium ion battery cell, a magnesium ion battery cell, etc., which are not limited by the embodiments of the application. The battery cell may be in cylindrical, flat, cuboid or other shapes, which is not limited by the embodiments of the application. Generally, the battery cells are divided into three types according to packaging manners: cylindrical battery cells, square battery cells and pouch battery cells, which are not limited by the embodiments of the application.

The battery mentioned in the embodiments of the application refers to a single physical module which includes one or a plurality of battery cells and therefore provides a higher voltage and capacity. For example, the battery mentioned in the application may include a battery module or a battery pack, etc. Generally, the battery includes a box for packaging one or a plurality of battery cells. The box may prevent liquid or other foreign matter from affecting charging or discharging of the battery cell.

The battery cell includes an electrode assembly and an electrolyte, the electrode assembly being composed of a positive pole piece, a negative pole piece and a separator film. The battery cell works mainly depending on movement of metal ions between the positive pole piece and the negative pole piece. The positive pole piece includes a positive current collector and a positive active material layer, a surface of the positive current collector is coated with the positive active material layer, a portion, not coated with the positive active material layer, of the positive current collector protrudes out of a portion, coated with the positive active material layer, of the positive current collector, and the portion, not coated with the positive active material layer, of the positive current collector serves as a positive tab. Taking a lithium ion battery as an example, the positive current collector may be made of aluminum, and the positive active material layer includes a positive active material which may be lithium cobaltate, lithium iron phosphate, ternary lithium or lithium manganate. The negative pole piece includes a negative current collector and a negative active material layer, a surface of the negative current collector is coated with the negative active material layer, a portion, not coated with the negative active material layer, of the negative current collector protrudes out of a portion, coated with the negative active material layer, of the negative current collector, and the portion, not coated with the negative active material layer, of the negative current collector serves as a negative tab. The negative current collector may be made of copper, and the negative active material layer includes a negative active material which may be carbon or silicon. In order to guarantee that fusing does not occur during large current flow, a plurality of positive tabs are stacked together, and a plurality of negative tabs are stacked together. The separator film may be made from polypropylene (PP), polyethylene (PE), etc. In addition, the electrode assembly may be in a winding structure or a laminated structure, which is not limited in the embodiments of the application.

For general electrode assemblies, the arrangement of active materials in pole pieces is unreasonable and less economical.

An electrode assembly with a winding structure includes a straight area and a bent area. The inventor found that the thickness of an inner active material layer in the straight area of the positive pole piece is equal to that of an inner active material layer in the bending area of the positive pole piece, and the inner active material layer in the straight area of the positive pole piece is made of the same material as the inner active material layer in the bending area of the positive pole piece; the thickness of an outer active material layer in the straight area of the negative pole piece is equal to that of an outer active material layer in the bent area of the negative pole piece, and the outer active material layer in the straight area of the negative pole piece is made of the same material as the outer active material layer in the bent area of the negative pole piece.

In the bent area, the radius of the inner active material layer of the positive pole piece is larger than that of the outer active material layer of the negative pole piece inside the positive pole piece, i.e., the radius of the outer active material layer of the negative pole piece is less than that of the inner active material layer of the positive pole piece outside the negative pole piece. In the straight region, the inner active material layer of the positive pole piece and the outer active material layer of the negative pole piece are arranged correspondingly.

When the capacity of the active material layer inside the straight region of the positive pole piece is designed to meet requirements, excessive active material layers inside the bent area of the positive pole piece cause the negative pole piece inside the positive pole piece to be prone to lithium plating. When the capacity of the active material layer outside the straight region of the negative pole piece is designed to meet requirements, the active material layer outside the bent area of the negative pole piece tends to be insufficient and leads to lithium plating. Therefore, the electrode assembly with such structure has an unreasonable arrangement of active materials in pole pieces, which is less economical and easily triggers the risk of lithium plating.

In view of this, an embodiment of the application provides a technical solution. In the technical solution, the electrode assembly includes a negative pole piece and a positive pole piece. The negative pole piece and the positive pole piece are wound in a winding direction to form a winding structure including a bent area and a straight area connected to the bent area. Both the negative pole piece and the positive pole piece include a plurality of bent portions located in the bent area and a plurality of straight portions located in the straight area. At least one of the bent portions of the positive pole piece is a first bent portion, and at least one of the straight portions of the positive pole piece is a first straight portion connected to the first bent portion, the capacity of an active material per unit area inside the first bent portion is lower than that of an active material per unit area inside the first straight portion; and/or at least one of the bent portions of the negative pole piece is a second bent portion, and at least one of the straight portions of the negative pole piece is a second straight portion connected to the second bent portion, the capacity of an active material per unit area outside the second bent portion is higher than that of an active material per unit area outside the second straight portion. Such structure allows the arrangement of active materials in pole pieces to be more reasonable, which is more economical and reduces the risk of lithium plating.

The technical solution described in the embodiment of the application is applicable to batteries and electric devices using the batteries.

The electric devices may be vehicles, mobile phones, portable devices, laptops, ships, spacecraft, electric toys and electric tools. The vehicles may be fuel vehicles, gas vehicles or new energy vehicles, and the new energy vehicles may be battery electric vehicles, hybrid electric vehicles, extended-range vehicles, etc. The spacecrafts include airplanes, rockets, space shuttles, spaceships, etc. The electric toys include fixed or mobile electric toys, such as game machines, electric car toys, electric ship toys and electric airplane toys. The electric tools include metal cutting electric tools, electric grinding tools, electric assembling tools and electric tools for railways, such as electric drills, electric grinders, electric wrenches, electric screwdrivers, electric hammers, impact electric drills, concrete vibrators, electric planers, etc. The embodiment of the application does not impose special restrictions on the above-mentioned electric devices.

For the sake of illustration, the following embodiments are illustrated with a vehicle as an electric device.

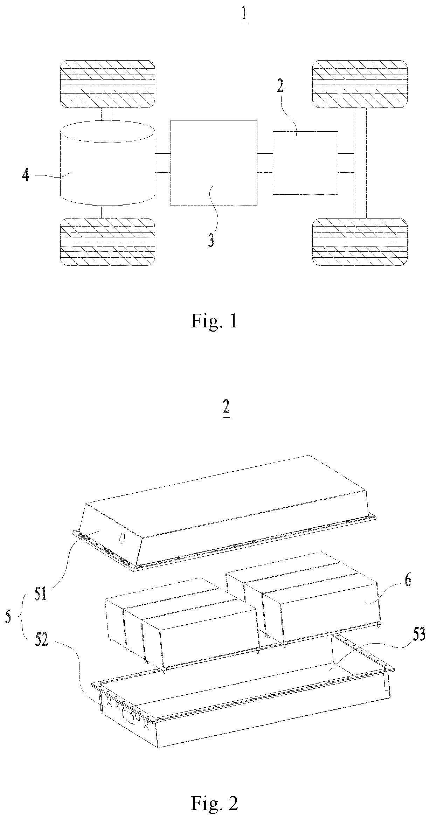

Fig. 1 is a schematic structural diagram of a vehicle provided in some embodiments of the application. As shown in Fig. 1, a battery 2 is disposed inside a vehicle 1, and the battery 2 may be disposed at the bottom, head or tail of the vehicle 1. The battery 2 may be used for supplying electricity to the vehicle 1, for example, the battery 2 may be used as an operating power source for the vehicle 1.

The vehicle 1 may further include a controller 3 and a motor 4, where the controller 3 is used for controlling the battery 2 to supply electricity to the motor 4 to be used for, for example, operating electricity requirements during start-up, navigation and running of the vehicle 1.

In some embodiments of the application, the battery 2 may not only serve as the operating power source for the vehicle 1, but also serve as a driving power source for the vehicle 1, so as to replace or partially replace fuel or natural gas to provide driving power for the vehicle 1.

Fig. 2 is an exploded view of a battery provided in some embodiments of the application. As shown in Fig. 2, the battery 2 includes a box 5 and a battery cell (not shown in Fig. 2), and the battery cell is accommodated in the box 5.

The box 5 is used for accommodating the battery cell and may be of various structures. In some embodiments, the box 5 may include a first box portion 51 and a second box portion 52, the first box portion 51 and the second box portion 52 may cover each other, and the first box portion 51 and the second box portion 52 define an accommodating space 53 for accommodating the battery cell together. The second box portion 52 may be of a hollow structure with an opening end, the first box portion 51 is of a plate-like structure, and the first box portion 51 covers an opening side of the second box portion 52 so as to form the box 5 with the accommodating space 53. The first box portion 51 and the second box portion 52 may be both of hollow structures with opening sides, and an opening side of the first box portion 51 covers the opening side of the second box portion 52 so as to form the box 5 with the accommodating space 53. Of course, the first box portion 51 and the second box portion 52 may be in various shapes, such as a cylinder or a cuboid.

In order to improve sealability after the first box portion 51 and the second box portion 52 are connected, a seal, such as a sealant or a seal ring, may be arranged between the first box portion 51 and the second box portion 52.

Assuming that the first box portion 51 covers a top portion of the second box portion 52, the first box portion 51 may also be referred to as an upper box cover, and the second box portion 52 may also be referred to as a lower box.

There may be one or more battery cells in the battery 2. If there are a plurality of battery cells, the plurality of battery cells may be connected in series, in parallel, or in a series-parallel manner. The plurality of battery cells may be directly connected in series, in parallel, or in a series-parallel manner, and then a whole formed by the plurality of battery cells is accommodated in the box 5. Of course, the plurality of battery cells may be connected in series, in parallel, or in a series-parallel manner first to form a battery module 6, and then a plurality of battery modules 6 are connected in series, in parallel, or in a series-parallel manner to form a whole to be accommodated in the box 5.

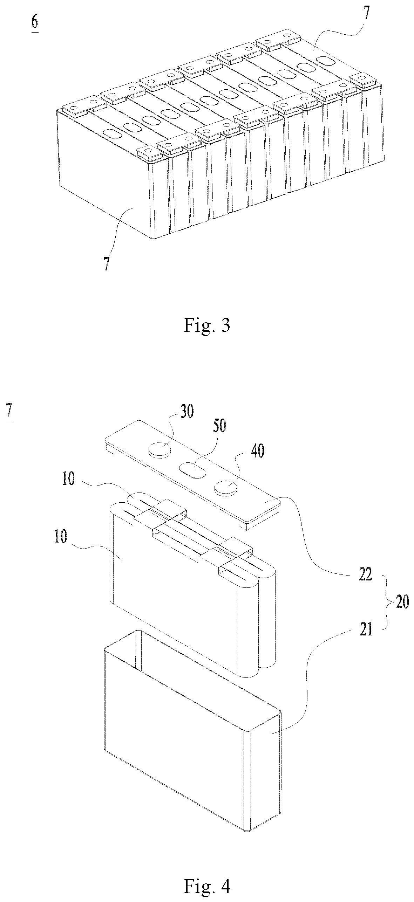

Fig. 3 is a schematic structural diagram of a battery module provided in some embodiments of the application. As shown in Fig. 3, in some embodiments, a plurality of battery cells 7 are provided, and the plurality of battery cells 7 are connected in series, in parallel or in parallel-series to form battery modules 6, then the plurality of battery modules 6 are connected in series, in parallel or in parallel-series to form a single unit, and are accommodated in the box.

The plurality of battery cells 7 in the battery module 6 may be electrically connected to each other by means of bus components, so as to be connected in series, in parallel, or in a series-parallel manner.

Fig. 4 is an exploded view of battery cells shown in Fig. 3. As shown in Fig. 4, the battery cells 7 provided in the embodiment of the application include an electrode assembly 10 and a case 20, and the electrode assembly 10 is accommodated in the case 20.

In some embodiments, the case 20 may also be used for accommodating an electrolyte, such as an electrolytic solution. The case 20 may be of various structures.

In some embodiments, the case 20 may include a casing 21 and an end cover 22, the casing 21 is of a hollow structure with an opening side, and the end cover 22 covers an opening of the casing 21 to form a sealed connection, so as to form a sealed space for accommodating the electrode assembly 10 and the electrolyte.

The casing 21 may be in various shapes, such as a cylinder or a cuboid. The shape of the casing 21 may be determined according to a specific shape of the electrode assembly 10. For example, if the electrode assembly 10 is of a cylindrical structure, a cylindrical casing may be selected and used. If the electrode assembly 10 is of a cuboid structure, a cuboid casing may be selected and used. Of course, the end cover 22 may also be of various structures, for example, the end cover 22 may be of a plate-like structure or a hollow structure with an opening end. Illustratively, in Fig. 4, the casing 21 is of a cuboid structure, the end cover 22 is of a plate-like structure, and the end cover 22 covers an opening at a top portion of the casing 21.

In some embodiments, the battery cell 7 may further include a positive electrode terminal 30, a negative terminal 40 and a pressure relief mechanism 50, all of which are arranged on the end cover 22. The positive terminal 30 and the negative terminal 40 are both used for being electrically connected to the electrode assembly 10, so as to output electrical energy generated by the electrode assembly 10. The pressure relief mechanism 50 is used for relieving a pressure inside the battery cell 7 when an internal pressure or temperature of the battery cell 7 reaches a predetermined value.

Illustratively, the pressure relief mechanism 50 is positioned between the positive electrode terminal 30 and the negative terminal 40 and may be components such as an explosion-proof valve, an explosion-proof sheet, an air valve, a pressure relief valve, or a safety valve.

Certainly, in some other embodiments, the case 20 may also have other structures. For example, the case 20 includes a casing 21 and two end covers 22, the casing 21 is a hollow structure with opposite sides open, and each of the end covers 22 covers an opening of the casing 21 correspondingly to form a sealed connection, so as to form a sealed space for accommodating the electrode assembly 10 and an electrolyte. In this structure, the positive electrode terminal 30 and the negative electrode terminal 40 may be arranged on the same end cover 22, or may be arranged on different end covers 22. The pressure relief mechanism 50 may be arranged on one end cover 22, or the pressure relief mechanisms 50 may be arranged on both of the end covers 22.

It should be noted that in the battery cell 7, there may be one or more electrode assemblies 10 accommodated in the case 20. Illustratively, in Fig. 4, there are two electrode assemblies 10.

Next, a specific structure of the electrode assembly 10 will be described in detail with reference to the accompanying drawings.

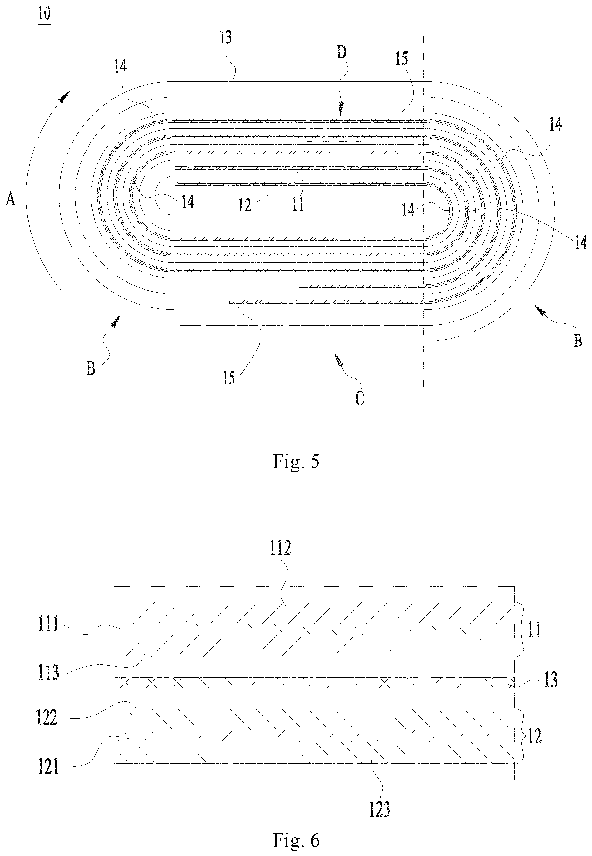

Fig. 5 is a schematic structural diagram of an electrode assembly provided in some embodiments of the application.

As shown in Fig. 5, the electrode assembly 10 in the embodiments of the application includes a positive pole piece 11 and a negative pole piece 12, the negative pole piece 12 and the positive pole piece 11 are wound in a winding direction A to form a winding structure including a bent area B and a straight area C connected to the bent area B. Both the negative pole piece 12 and the positive pole piece 11 include a plurality of bent portions 14 located in the bent area B and a plurality of straight portions 15 located in the straight area C.

At least one of the bent portions 14 of the positive pole piece 11 is a first bent portion, and at least one of the straight portions 15 of the positive pole piece 11 is a first straight portion connected to the first bent portion, the capacity of an active material per unit area inside the first bent portion is lower than that of an active material per unit area inside the first straight portion; and/or at least one of the bent portions 14 of the negative pole piece 12 is a second bent portion, and at least one of the straight portions 15 of the negative pole piece 12 is a second straight portion connected to the second bent portion, the capacity of an active material per unit area outside the second bent portion is higher than that of an active material per unit area outside the second straight portion.

If the capacity of the active material per unit area inside the first bent portion is lower than that of the active material per unit area inside the first straight portion, a situation that there is excessive active material inside the first bent portion is not likely to occur, which allows the arrangement of the active material in the positive pole piece 11 to be more reasonable and reduces the risk of lithium plating. If the capacity of the active material per unit area outside the second bent portion is higher than that of the active material per unit area outside the second straight portion, a situation that there is insufficient active material outside the second bent portion is not likely to occur, and the risk of lithium plating is reduced. The electrode assembly 10 with such structure has a more reasonable arrangement of active materials in pole pieces, which is more economical and reduces the risk of lithium plating.

When the capacity of the active material per unit area inside the first straight portion meets design requirements, i.e., the capacity of the active material per unit area inside the first straight portion reaches a first preset value, the active material outside the straight portion 15 inside the first straight portion of the negative pole piece 12 is not prone to lithium plating. Since the capacity of the active material per unit area inside the first bent portion is lower than that of the active material per unit area inside the first straight portion, which is equivalent to reducing the capacity of the active material per unit area inside the first bent portion relative to the first preset value, such that the bent portions 14 inside the first bent portion of the negative pole piece 12 are not prone to lithium plating.

Similarly, if the capacity of the active material per unit area outside the second straight portion meets design requirements, i.e., the capacity of the active material per unit area outside the second straight portion reaches a second preset value, the active material outside the second straight portion is not prone to lithium plating. Since the capacity of the active material per unit area outside the second bent portion is higher than that of the active material per unit area outside the second straight portion, which is equivalent to increasing the capacity of the active material per unit area outside the second bent portion relative to the second preset value, the CB value of the active material outside the second bent portion can be increased, such that the active material outside the second bent portion is not prone to lithium plating.

The cell balance (CB) value is the ratio of the capacity of the negative active material per unit area to the capacity of the positive active material per unit area. For example, the cell balance (CB) value of the active material outside the bent portions 14 of the negative pole piece 12 is Q1/Q2, where the capacity of the active material per unit area of the active material outside one of the bent portions 14 of the negative pole piece 12 is Q1, and the capacity of the active material per unit area of the active material inside a bent portion 14 located outside and adjacent to the one bent portion 14 of the positive pole piece 11 is Q2. The cell balance (CB) value of the active material outside the straight portions 15 of the negative pole piece 12 is Q3/Q4, where the capacity of the active material per unit area of the active material outside one of the straight portions 15 of the negative pole piece 12 is Q3, and the capacity of the active material per unit area of the active material inside a straight portion 15 located outside and adjacent to the one straight portion 15 of the positive pole piece 11 is Q4.

The inventor also found that the positive pole piece and the negative pole piece are bent in the bent area when the positive pole piece and the negative pole piece are wound, which may cause the respective active material to shed, called dusting. In particular, the innermost bent portion of the negative pole piece and the innermost bent portion of the positive pole piece have the maximum degree of bending, and are more likely to cause the active materials to shed. The shedding of active materials, especially the shedding of the active material from the negative pole piece, may cause lithium intercalation sites of the active material of the negative pole piece to be less than the amount of lithium ions that can be supplied by active materials of adjacent positive pole pieces, therefore, lithium ion battery cells are prone to lithium plating during charging.

In some embodiments, at least one of the innermost bent portions 14 of the positive pole piece 11 is the first bent portion. Since the capacity of the active material per unit area inside the first bent portion is lower than that of the active material per unit area inside the first straight portion, which is equivalent to reducing the capacity of the active material per unit area inside the first bent portion, the risk of lithium plating at the bent portion 14 inside the first bent portion of the negative pole piece 12 can be reduced even if the active material outside the bent portion 14 inside the first bent portion of the negative pole piece 12 sheds.

In some embodiments, at least one of the innermost bent portions 14 of the negative pole piece 12 is the second bent portion. Since the capacity of the active material per unit area outside the second bent portion is higher than that of the active material per unit area outside the second straight portion, which is equivalent to increasing the capacity of the active material per unit area outside the second bent portion, i.e., increasing the CB value of the active material outside the second bent portion, requirements of the active material outside the second bent portion for the CB value can be satisfied even if the active material outside the second bent portion sheds during bending, thereby reducing the risk of lithium plating.

In the embodiments of the application, the winding direction A is a direction in which the positive pole piece 11 and the negative pole piece 12 are wound circumferentially from the inside out. In Fig. 5, the winding direction A is clockwise.

In some embodiments, the electrode assembly 10 may further include a separator 13 for separating the positive pole piece 11 from the negative pole piece 12, so as to reduce the risk of short circuit between the positive pole piece 11 and the negative pole piece 12. The separator 13 has a large number of through micropores, which can ensure free passage of electrolyte ions and has good permeability to lithium ions. Therefore, the separator 13 can hardly block the passage of lithium ions.

The separator 13 may be made of polypropylene (PP) or polyethylene (PE).

In some embodiments, two bent areas B are provided and arranged at both ends of a straight area C respectively. The straight region C is a region in which the winding structure has a straight structure, and the straight portions 15 of the positive pole piece 11 and the straight portions 15 of the negative pole piece 12 are substantially arranged straight. The bent areas B are regions in which the winding structure has a bending structure. A part (bent portion 14) of the positive pole piece 11 and a part (bent portion 14) of the negative pole piece 12 in the bent areas B are distributed in a bending manner. Exemplarily, the bent portion 14 of the positive pole piece 11 and the bent portion 14 of the negative pole piece 12 are both arc-shaped.

It should be noted that under the condition that a first bent portion is arranged in the bending regions B, the first bent portion may be arranged in only one of the bending regions B, or the first bent portion may be arranged in both bending regions B; under the condition that a second bent portion is arranged in the bending regions B, the second bent portion may be arranged in only one of the bending regions B, or the second bent portion may be arranged in both bending regions B. Exemplarily, as shown in Fig. 5, in the bending regions B, a plurality of bent portions 14 of the positive pole piece 11 and a plurality of bent portions 14 of the negative pole piece 12 are alternately arranged, i.e., in the bending regions B, one bent portion 14 of the negative pole piece 12, one bent portion 14 of the positive pole piece 11, one bent portion 14 of the negative pole piece 12 ... are arranged sequentially. In some embodiments, one of the innermost bent portions 14 of the positive pole piece 11 is located outside one of the innermost bent portions 14 of the negative pole piece 12.

Fig. 6 is an enlarged view of the electrode assembly shown in Fig. 5 at a square frame D.

As shown in Fig. 6, in some embodiments, the negative pole piece 12 includes a negative current collector 121 and negative active material layers arranged on both sides in a thickness direction of the negative current collector 121, and the negative active material layers on both sides in the thickness direction of the negative current collector 121 are respectively referred to as an inner negative active material layer 123 and an outer negative active material layer 122. In some examples, the inner negative active material layer 123 is coated on an inner surface of the negative current collector 121, and the outer negative active material layer 122 is coated on an outer surface of the negative current collector 121.

The positive pole piece 11 includes a positive current collector 111 and positive active material layers arranged on both sides in a thickness direction of the positive current collector 111, and the positive active material layers on both sides in the thickness direction of the positive current collector 111 are respectively referred to as an inner positive active material layer 113 and an outer positive active material layer 112. In some examples, the inner positive active material layer 113 is coated on an inner surface of the positive current collector 111 and the outer positive active material layer 112 is coated on an outer surface of the positive current collector 111.

The negative current collector 121 may have a portion not coated with a negative active material layer, the portion is a negative tab (not shown); and the positive current collector 111 may have a portion not coated with a positive active material layer, the portion is a positive tab (not shown). The positive tab is used for electrical connection with a positive electrode terminal, and the negative tab is used for electrical connection with a negative electrode terminal.

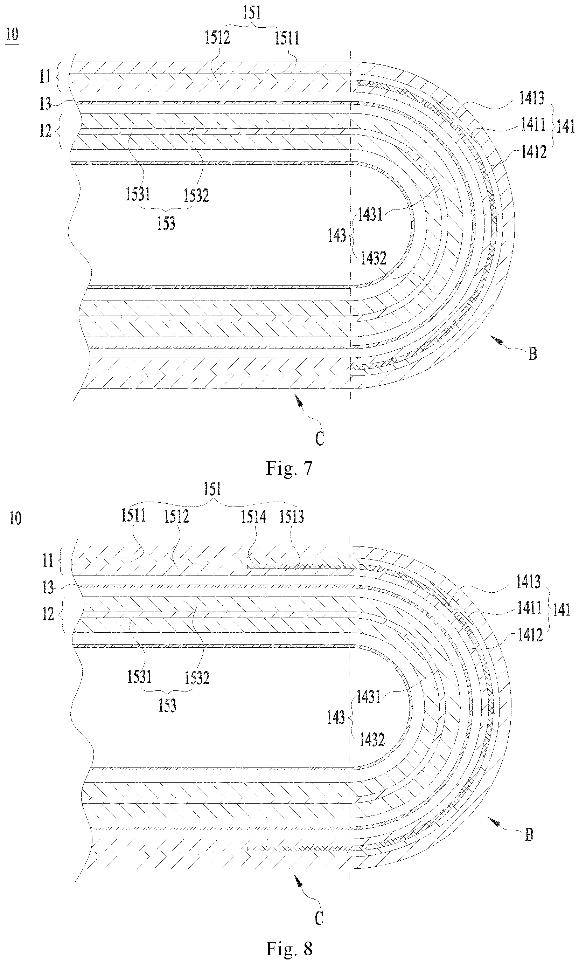

Fig. 7 is a local sectional view of an electrode assembly provided in some embodiments of the application.

As shown in Fig. 7, in some embodiments, at least one of the bent portions of the positive pole piece 11 is a first bent portion 141, and at least one of the straight portions of the positive pole piece 11 is a first straight portion 151 connected to the first bent portion 141, and the capacity of the active material per unit area inside the first bent portion 141 is lower than that of the active material per unit area inside the first straight portion 151. Exemplarily, both ends of the first bent portion 141 in the winding direction are respectively connected to two first straight portions 151.

The bent portion adjacent to the first bent portion 141 of the negative pole piece 12 is a third bent portion 143, and at least one of the straight portions of the negative pole piece 12 is a third straight portion 153 connected to the third bent portion 143. The capacity of the active material per unit area outside the third bent portion 143 is equal to the capacity of the active material per unit area outside the third straight portion 153. Exemplarily, both ends of the third bent portion 143 in the winding direction are respectively connected to two third straight portions 153.

In some embodiments, both sides of the first bent portion 141 are provided with bent portions of the negative pole piece 12 adjacent to the first bent portion, and the bent portions of the negative pole piece 12 located at least inside the first bent portion 141 and adjacent to the first bent portion 141 are third bent portions 143. Optionally, the bent portions of the negative pole piece 12 located on both sides of the first bent portion 141 and adjacent to the first bent portion 141 are all third bent portions 143.

Under the condition that the capacity of the active material per unit area inside the first bent portion 141 is lower than that of the active material per unit area inside the first straight portion 151, the capacity of the active material per unit area outside the third bent portion 143 may be equal to that of the active material per unit area outside the third straight portion 153 to simplify the manufacturing process of the negative pole piece 12.

The first bent portion 141 includes a first current collecting portion 1411 and a first internal active material portion 1412 disposed inside the first current collecting portion 1411. It should be understood that the first current collecting portion 1411 is a part of the positive current collector located at the first bent portion 141, and the first internal active material portion 1412 is a part of the inner positive active material layer located at the first bent portion 141.

In some embodiments, the first bent portion 141 further includes a first conductive portion 1413 connected between the first current collecting portion 1411 and the first internal active material portion 1412. Exemplarily, the first conductive portion 1413 is coated on an inner surface of the first current collecting portion 1411, and the first internal active material portion 1412 is coated on a surface, away from the first current collecting portion 1411, of the first conductive portion 1413. According to the embodiments of the application, the capacity of the active material per unit area inside the first bent portion 141 is reduced by arranging the first conductive portion 1413.

The first straight portion 151 includes a second current collecting portion 1511 and a second internal active material portion 1512 disposed inside the second current collecting portion 1511. It should be understood that the second current collecting portion 1511 is a part of the positive current collector located at the first straight portion 151, and the second internal active material portion 1512 is a part of the inner positive active material layer located at the first straight portion 151. Exemplarily, the second internal active material portion 1512 is coated on an inner surface of the second current collecting portion 1511.

The capacity of the active material per unit area inside the first bent portion 141 is lower than that of the active material per unit area inside the first straight portion 151. The capacity of the active material per unit area inside the first bent portion 141 is the ratio of the capacity of the active material of a first coated part inside the first current collecting portion 1411 to the area of the first coated part, the first coated part includes the first internal active material portion 1412 and the first conductive portion 1413, and the area of the first coated part is equal to that of an area of the inner surface of the first current collecting portion 1411 coated with the first coated part. The capacity of the active material per unit area inside the first straight portion 151 is the ratio of the capacity of the active material of a second coated part inside the second current collecting portion 1511 to the area of the second coated part, the second coated part includes the second internal active material portion 1512, and the area of the second coated part is equal to that of a region of the inner surface of the second current collecting portion 1511 coated with the second coated part.

The third bent portion 143 includes a fifth current collecting portion 1431 and a fourth external active material portion 1432 disposed outside the fifth current collecting portion 1431. It should be understood that the fifth current collecting portion 1431 is a part of the negative current collector located at the third bent portion 143, and the fourth external active material portion 1432 is a part of the outer negative active material layer located at the third bent portion 143. Exemplarily, the fourth external active material portion 1432 is coated on an outer surface of the fifth current collecting portion 1431.

The third straight portion 153 includes a sixth current collecting portion 1531 and a fifth external active material portion 1532 disposed outside the sixth current collecting portion 1531. It should be understood that the sixth current collecting portion 1531 is a part of the negative current collector located at the third straight portion 153, and the fifth external active material portion 1532 is a part of the outer negative active material layer located at the third straight portion 153. Exemplarily, the fifth external active material portion 1532 is coated on an outer surface of the sixth current collecting portion 1531.

The capacity of the active material per unit area outside the third bent portion 143 is equal to that of the active material per unit area outside the third straight portion 153, i.e., the capacity of the active material per unit area of the fourth external active material portion 1432 is equal to that of the active material per unit area of the fifth external active material portion 1532. The capacity of the active material per unit area outside the third bent portion 143 is the ratio of the capacity of the active material of the fourth external active material portion 1432 to the area of the fourth external active material portion 1432, and the area of the fourth external active material portion 1432 is equal to that of a region of the outer surface of the fifth current collecting portion 1431 coated with the fourth external active material portion 1432. The capacity of the active material per unit area outside the third straight portion 153 is the ratio of the capacity of the active material of the fifth external active material portion 1532 to the area of the fifth external active material portion 1532, and the area of the fifth external active material portion 1532 is equal to that of a region of the outer surface of the sixth current collecting portion 1531 coated with the fifth external active material portion 1532.

In the positive pole piece 11, all the bent portions may be the first bent portions 141, or some of the bent portions may be the first bent portions 141. In the negative pole piece 12, all the bent portions may be the third bent portions 143, or only some of the bent portions may be the third bent portions 143.

In some embodiments, all the bent portions of the negative pole piece 12 are the third bent portions 143 to simplify the manufacturing process of the negative pole piece 12.

In the embodiments of the application, there may be several ways to achieve that the capacity of the active material per unit area inside the first bent portion 141 is lower than that of the active material per unit area inside the first straight portion 151.

In some embodiments, the thickness of the second internal active material portion 1512 is greater than that of the first internal active material portion 1412, such that the capacity of the active material per unit area inside the first bent portion 141 is lower than that of the active material per unit area inside the first straight portion 151.

In some embodiments, other parameters of the first internal active material portion 1412 are substantially the same as those of the second internal active material portion 1512 except for thickness. For example, the active material of the first internal active material portion 1412 is the same as that of the second internal active material portion 1512, and the weight ratio of the active material of the first internal active material portion 1412 to the first internal active material portion 1412 is equal to that of the active material of the second internal active material portion 1512 to the second internal active material portion 1512. Under the condition that other parameters (e.g., type of active material and weight ratio of active material) are the same, the thickness of the second internal active material portion 1512 is greater than that of the first internal active material portion 1412, which allows the capacity of the active material per unit area of the second internal active material portion 1512 to be higher than that of the active material per unit area of the first internal active material portion 1412, such that the capacity of the active material per unit area inside the first bent portion 141 is lower than that of the active material per unit area inside the first straight portion 151.

The active material of the first internal active material portion 1412 and the active material of the second internal active material portion 1512 may be lithium iron phosphate, lithium manganate, ternary lithium and lithium cobaltate. The first internal active material portion 1412 and the second internal active material portion 1512 are cured from an active paste with the same composition.

Optionally, the thickness of the second internal active material portion 1512 is 0.5%-20% greater than that of the first internal active material portion 1412.

In some embodiments, the thickness of the second internal active material portion 1512 is greater than or equal to the total thickness of the first internal active material portion 1412 and the first conductive portion 1413. Optionally, the thickness of the second internal active material portion 1512 is equal to the total thickness of the first internal active material portion 1412 and the first conductive portion 1413.

It should be noted that in other embodiments, the first internal active material portion may also be connected between the first conductive portion and the first current collecting portion.

In some embodiments, the first conductive portion 1413 may be a pure conductive coating, for example, the first conductive portion 1413 is a pure conductive coating composed of an adhesive and a conductive agent; the first conductive portion 1413 may also be an active coating containing lithium ions, for example, the first conductive portion 1413 is a lithium ion-containing active coating composed of a lithium-rich material, an adhesive and a conductive agent; the first conductive portion 1413 may also be a lithium ion-containing inactive coating, for example, the first conductive portion 1413 is a lithium ion-containing inactive coating composed of an adhesive, a conductive agent and a lithium powder coated with lithium carbonate.

In some embodiments, the first conductive portion 1413 contains an active material. The gram capacity of the active material of the first conductive portion 1413 is lower than that of the active material of the first internal active material portion 1412; in the application, the active material with lower gram capacity is added to the first conductive portion 1413 to reduce the capacity of the active material per unit area inside the first bent portion 141, such that the capacity of the active material per unit area inside the first bent portion 141 is lower than that of the active material per unit area inside the first straight portion 151. Exemplarily, the weight ratio of the active material of the first conductive portion 1413 to the first conductive portion 1413 is equal to that of the active material of the first internal active material portion 1412 to the first internal active material portion 1412.

The gram capacity is a ratio of capacitance released by the active material to mass of the active material.

In some other embodiments, the first conductive portion 1413 contains an active material. The weight ratio of the active material of the first conductive portion 1413 to the first conductive portion 1413 is less than that of the active material of the first internal active material portion 1412 to the first internal active material portion 1412 to reduce the capacity of the active material per unit area inside the first bent portion 141, such that the capacity of the active material per unit area inside the first bent portion 141 is lower than that of the active material per unit area inside the first straight portion 151. Exemplarily, the gram capacity of the active material of the first conductive portion 1413 is equal to that of the active material of the first internal active material portion 1412.

It should be noted that in the embodiments of the application, there may be several ways to achieve that the capacity of the active material per unit area outside the third bent portion 143 is equal to that of the active material per unit area outside the third straight portion 153. For example, the active material of the fourth external active material portion 1432 of the third bent portion 143 is the same as the active material of the fifth external active material portion 1532 of the third straight portion 153, and the thickness of the fourth external active material portion 1432 is equal to that of the fifth external active material portion 1532.

Fig. 8 is a local sectional view of an electrode assembly provided in some other embodiments of the application.

As shown in Fig. 8, in some embodiments, the first straight portion 151 further includes a third internal active material portion 1513 and a second conductive portion 1514, the third internal active material portion 1513 is arranged inside the second current collecting portion 1511, and the second conductive portion 1514 is connected between the second current collecting portion 1511 and the third internal active material portion 1513. The second conductive portion 1514 is connected between the first conductive portion 1413 and the second internal active material portion 1512, and the third internal active material portion 1513 is connected between the first internal active material portion 1412 and the second internal active material portion 1512.

The capacity of the active material per unit area inside the first straight portion 151 is the ratio of the capacity of the active material of a second coated part inside the second current collecting portion 1511 to the area of the second coated part, the second coated part includes the second internal active material portion 1512, the third internal active material portion 1513 and the second conductive portion 1514, and the area of the second coated part is equal to that of a region of the inner surface of the second current collecting portion 1511 coated with the second coated part.

In some embodiments, the thickness of the first conductive portion 1413 is equal to that of the second conductive portion 1514. The first conductive portion 1413 is made of the same material as the second conductive portion 1514, for example, the first conductive portion 1413 and the second conductive portion 1514 are cured from the same conductive paste. In the embodiments of the application, in the coating process of the positive pole piece 11, the conductive paste can be coated on both the first current collecting portion 1411 and the second current collecting portion 1511 without strictly limiting the conductive paste to the first current collecting portion 1411, thereby reducing precision requirements for the coating process.

In some embodiments, the thickness of the first internal active material portion 1412 is equal to that of the third internal active material portion 1513.

In some embodiments, the first internal active material portion 1412, the second internal active material portion 1512 and the third internal active material portion 1513 are made of the same material, for example, the three portions are cured from the same active paste.

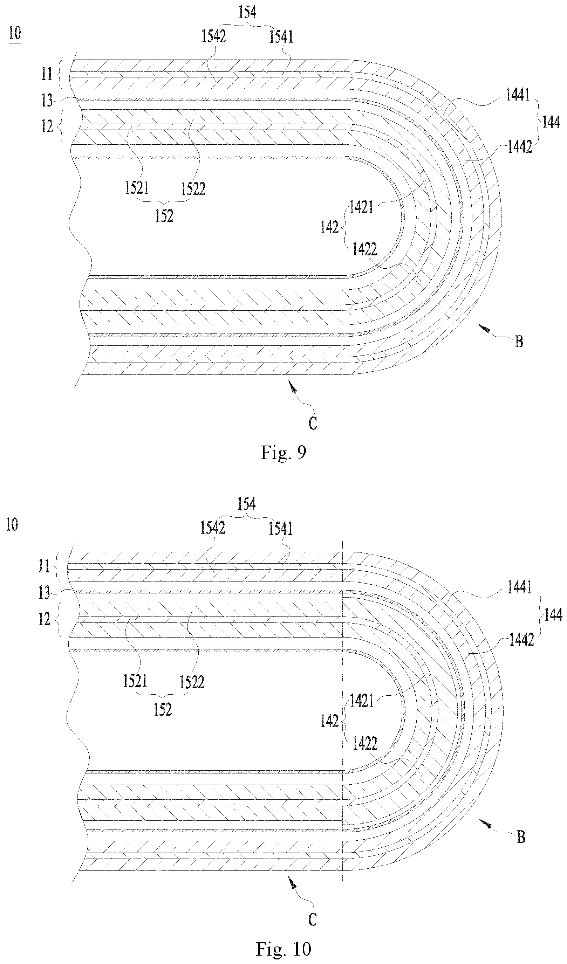

Fig. 9 is a local sectional view provided in some other embodiments of the application.

As shown in Fig. 9, in some embodiments, at least one of the bent portions of the negative pole piece 12 is a second bent portion 142, at least one of the straight portions of the negative pole piece 12 is a second straight portion 152 connected to the second bent portion 142, and the capacity of the active material per unit area outside the second bent portion 142 is higher than that of the active material per unit area outside the second straight portion 152. Exemplarily, both ends of the second bent portion 142 in the winding direction are respectively connected to two second straight portions 152.

The bent portion of the positive pole piece 11 adjacent to the second bent portion 142 is a fourth bent portion 144, and at least one of the straight portions of the positive pole piece 11 is a fourth straight portion 154 connected to the fourth bent portion 144. The capacity of the active material per unit area inside the fourth bent portion 144 is equal to that of the active material per unit area inside the fourth straight portion 154. Exemplarily, both ends of the fourth bent portion 144 in a winding direction are respectively connected to two fourth straight portions 154.

In some embodiments, both sides of the second bent portion 142 are provided with bent portions of the positive pole piece 11 adjacent to the second bent portion, and the bent portions of the positive pole piece 11 located at least outside the second bent portion 142 and adjacent to the second bent portion 142 are fourth bent portions 144. Optionally, the bent portions of the positive pole piece 11 located on both sides of the second bent portion 142 and adjacent to the second bent portion 142 are all fourth bent portions 144.

Under the condition that the capacity of the active material per unit area outside the second bent portion 142 is higher than that of the active material per unit area outside the second straight portion 152, the capacity of the active material per unit area inside the fourth bent portion 144 may be equal to that of the active material per unit area inside the fourth straight portion 154 to simplify the manufacturing process of the positive pole piece 11.

The second bent portion 142 includes a third current collecting portion 1421 and a first external active material portion 1422 disposed outside the third current collecting portion 1421. It should be understood that the third current collecting portion 1421 is a part of the negative current collector located at the third bent portion 143, and the first external active material portion 1422 is a part of the outer negative active material layer located at the third bent portion 143. Exemplarily, the first external active material portion 1422 is coated on an outer surface of the third current collecting portion 1421.

The second straight portion 152 includes a fourth current collecting portion 1521 and a second external active material portion 1522 disposed outside the fourth current collecting portion 1521. It should be understood that the fourth current collecting portion 1521 is a part of the negative current collector located at the second straight portion 152, and the second external active material portion 1522 is a part of the outer negative active material layer located at the second straight portion 152. Exemplarily, the second external active material portion 1522 is coated on an outer surface of the fourth current collecting portion 1521.

The capacity of the active material per unit area outside the second bent portion 142 is higher than that of the active material per unit area outside the second straight portion 152. The capacity of the active material per unit area outside the second bent portion 142 is the ratio of the capacity of the active material of a third coated part outside the third current collecting portion 1421 to the area of the third coated part, the third coated part includes the first external active material portion 1422, and the area of the third coated part is equal to that of a region of the outer surface of the third current collecting portion 1421 coated with the third coated part. The capacity of the active material per unit area outside the second straight portion 152 is the ratio of the capacity of the active material of a fourth coated part outside the fourth current collecting portion 1521 to the area of the fourth coated part, the fourth coated part includes the second external active material portion 1522, and the area of the fourth coated part is equal to that of a region of the outer surface of the fourth current collecting portion 1521 coated with the fourth coated part.

The fourth bent portion 144 includes a seventh current collecting portion 1441 and a fourth internal active material portion 1442 disposed inside the seventh current collecting portion 1441. It should be understood that the seventh current collecting portion 1441 is a part of the positive current collector located at the fourth bent portion 144, and the fourth internal active material portion 1442 is a part of the inner positive active material layer located at the fourth bent portion 144. Exemplarily, the fourth internal active material portion 1442 is coated on an inner surface of the seventh current collecting portion 1441.

The fourth straight portion 154 includes an eighth current collecting portion 1541 and a fifth internal active material portion 1542 disposed inside the eighth current collecting portion 1541. It should be understood that the eighth current collecting portion 1541 is a part of the positive current collector 111 located at the fourth straight portion 154, and the fifth internal active material portion 1542 is a part of the inner positive active material layer 113 located at the fourth straight portion 154. Exemplarily, the fifth internal active material portion 1542 is coated on an inner surface of the eighth current collecting portion 1541.

The capacity of the active material per unit area inside the fourth bent portion 144 is equal to that of the active material per unit area inside the fourth straight portion 154, i.e., the capacity of the active material per unit area of the fourth internal active material portion 1442 is equal to that of the active material per unit area of the fifth internal active material portion 1542. The capacity of the active material per unit area inside the fourth bent portion 144 is the ratio of the capacity of the active material of the fourth internal active material portion 1442 to the area of the fourth internal active material portion 1442, and the area of the fourth internal active material portion 1442 is equal to that of a region of the inner surface of the seventh current collecting portion 1441 coated with the fourth internal active material portion 1442. The capacity of the active material per unit area inside the fourth straight portion 154 is the ratio of the capacity of the active material of the fifth internal active material portion 1542 to the area of the fifth internal active material portion 1542, and the area of the fifth internal active material portion 1542 is equal to that of a region of the inner surface of the eighth current collecting portion 1541 coated with the fifth internal active material portion 1542.

In the negative pole piece 12, all the bent portions may be the second bent portions 142, or some of the bent portions may be the second bent portions 142. In the positive pole piece 11, all the bent portions may be the fourth bent portions 144, or only some of the bent portions may be the fourth bent portions 144.

In some embodiments, all the bent portions of the positive pole piece 11 are the fourth bent portions 144 to simplify the manufacturing process of the positive pole piece 11.

In the embodiments of the application, there may be several ways to achieve that the capacity of the active material per unit area outside the second bent portion 142 is higher than that of the active material per unit area outside the second straight portion 152.

The gram capacity of the active material of the first external active material portion 1422 is higher than that of the active material of the second external active material portion 1522, which allows the capacity of the active material per unit area of the first external active material portion 1422 to be higher than that of the active material per unit area of the second external active material portion 1522, such that the capacity of the active material per unit area outside the second bent portion 142 is higher than that of the active material per unit area outside the second straight portion 152. In some embodiments, other parameters of the first external active material portion 1422 are the same as those of the second external active material portion 1522 except for gram capacity. For example, the thickness of the first external active material portion 1422 is equal to that of the second external active material portion 1522, and the weight ratio of the active material of the first external active material portion 1422 to the first external active material portion 1422 is equal to that of the active material of the second external active material portion 1522 to the second external active material portion 1522.

In the embodiments, the active material of the first external active material portion 1422 is different from the active material of the second external active material portion 1522. For example, the active material of the first external active material portion 1422 is a silicon compound, and the active material of the second external active material portion 1522 is graphite.

In some other embodiments, the weight ratio of the active material of the first external active material portion 1422 to the first external active material portion 1422 is greater than that of the active material of the second external active material portion 1522 to the second external active material portion 1522, such that the capacity of the active material per unit area outside the second bent portion 142 is higher than that of the active material per unit area outside the second straight portion 152. Both the first external active material portion 1422 and the second external active material portion 1522 include active materials, adhesives and conductive agents. By increasing the weight ratio of the active material of the first external active material portion 1422, the capacity of the active material per unit area outside the second bent portion 142 is higher than that of the active material per unit area outside the second straight portion 152.

In some embodiments, the thickness of the first external active material portion 1422 is the same as that of the second external active material portion 1522, the active material of the first external active material portion 1422 is the same as the active material of the second external active material portion 1522, and the weight ratio of the active material of the first external active material portion 1422 to the first external active material portion 1422 is greater than that of the active material of the second external active material portion 1522 to the second external active material portion 1522.

Fig. 10 is a local sectional view of an electrode assembly provided in some other embodiments of the application.

As shown in Fig. 10, in some embodiments, the thickness of the first external active material portion 1422 is greater than that of the second external active material portion 1522, such that the capacity of the active material per unit area outside the second bent portion 142 is higher than that of the active material per unit area outside the second straight portion 152.

In some embodiments, other parameters of the first external active material portion 1422 are the same as those of the second external active material portion 1522 except for thickness. For example, the active material of the first external active material portion 1422 is the same as the active material of the second external active material portion 1522, and the weight ratio of the active material of the first external active material portion 1422 to the first external active material portion 1422 is equal to that of the active material of the second external active material portion 1522 to the second external active material portion 1522.

The active material of the first external active material portion 1422 and the active material of the second external active material portion 1522 may be graphite or silicon compounds. Exemplarily, the first external active material portion 1422 and the second external active material portion 1522 are cured from an active paste with the same composition.

Optionally, the thickness of the first external active material portion 1422 is 0.5%-20% greater than that of the second external active material portion 1522.

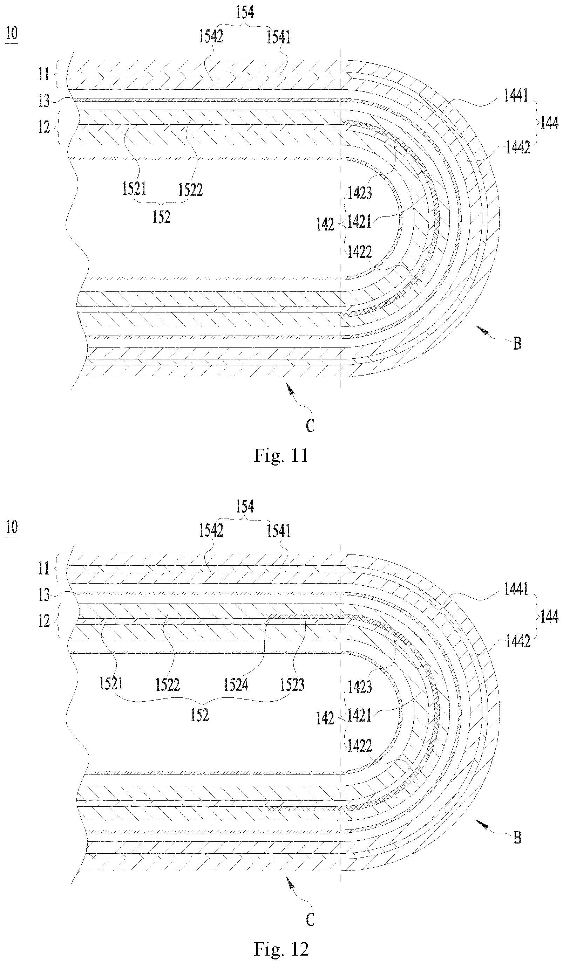

Fig. 11 is a local sectional view of an electrode assembly provided in some other embodiments of the application.

As shown in Fig. 11, the second bent portion 142 includes a third conductive portion 1423 connected between the third current collecting portion 1421 and the first external active material portion 1422. The third conductive portion 1423 contains an active material. Exemplarily, the third conductive portion 1423 is coated on an outer surface of the third current collecting portion 1421, and the first external active material portion 1422 is coated on a surface, away from the third current collecting portion 1421, of the third conductive portion 1423. According to the embodiments of the application, the capacity of the active material per unit area outside the second bent portion 142 is increased by arranging the third conductive portion 1423.

The capacity of the active material per unit area outside the second bent portion 142 is the ratio of the capacity of the active material of a third coated part outside the third current collecting portion 1421 to the area of the third coated part, the third coated part includes the first external active material portion 1422 and the third conductive portion 1423, and the area of the third coated part is equal to that of a region of the outer surface of the third current collecting portion 1421 coated with the third coated part.

In some embodiments, the thickness of the second external active material portion 1522 is greater than that of the first external active material portion 1422. Other parameters of the first external active material portion 1422 are substantially the same as those of the second external active material portion 1522 except for thickness. For example, the active material of the first external active material portion 1422 is the same as the active material of the second external active material portion 1522.

In some embodiments, the thickness of the second external active material portion 1522 is greater than or equal to the total thickness of the first external active material portion 1422 and the third conductive portion 1423. Optionally, the thickness of the second external active material portion 1522 is equal to the total thickness of the first external active material portion 1422 and the third conductive portion 1423.

It should be noted that in other embodiments, the first external active material portion 1422 may also be connected between the third conductive portion 1423 and the third current collecting portion 1421.

In some embodiments, the gram capacity of the active material of the third conductive portion 1423 is higher than that of the active material of the first external active material portion 1422; in the application, the active material with higher gram capacity is added to the third conductive portion 1423 to increase the capacity of the active material per unit area outside the second bent portion 142, such that the capacity of the active material per unit area outside the second bent portion 142 is higher than that of the active material per unit area outside the second straight portion 152. Exemplarily, the weight ratio of the active material of the third conductive portion 1423 to the third conductive portion 1423 is equal to that of the active material of the first external active material portion 1422 to the first external active material portion 1422.

In some other embodiments, the weight ratio of the active material of the third conductive portion 1423 to the third conductive portion 1423 is greater than that of the active material of the first external active material portion 1422 to the first external active material portion 1422 to increase the capacity of the active material per unit area outside the second bent portion 142, such that the capacity of the active material per unit area outside the second bent portion 142 is higher than that of the active material per unit area outside the second straight portion 152. Exemplarily, the gram capacity of the active material of the third conductive portion 1423 is equal to that of the active material of the first external active material portion 1422.

It should be noted that in the embodiments of the application, there may be several ways to achieve that the capacity of the active material per unit area inside the fourth bent portion 144 is equal to that of the active material per unit area inside the fourth straight portion 154. For example, the active material of the fourth internal active material portion 1442 of the fourth bent portion 144 is the same as the active material of the fifth internal active material portion 1542 of the fourth straight portion 154, and the thickness of the fourth internal active material portion 1442 is equal to that of the fifth internal active material portion 1542.

Fig. 12 is a local sectional view of an electrode assembly provided in some other embodiments of the application.

As shown in Fig. 12, the second straight portion 152 further includes a third external active material portion 1523 disposed outside the fourth current collecting portion 1521, and a fourth conductive portion 1524 connected between the fourth current collecting portion 1521 and the third external active material portion 1523. The fourth conductive portion 1524 is connected between the third conductive portion 1423 and the second external active material portion 1522, and the third external active material portion 1523 is connected between the first external active material portion 1422 and the second external active material portion 1522.

The capacity of the active material per unit area outside the second straight portion 152 is the ratio of the capacity of the active material of a fourth coated part outside the fourth current collecting portion 1521 to the area of the fourth coated part, the fourth coated part includes the second external active material portion 1522, the third external active material portion 1523 and the fourth conductive portion 1524, and the area of the fourth coated part is equal to that of a region of the outer surface of the fourth current collecting portion 1521 coated with the fourth coated part.

In some embodiments, the thickness of the third conductive portion 1423 is equal to that of the fourth conductive portion 1524. The third conductive portion 1423 is made of the same material as the fourth conductive portion 1524, for example, the third conductive portion 1423 and the fourth conductive portion 1524 are cured from the same conductive paste. In the embodiments of the application, in the coating process of the negative pole piece 12, the conductive paste can be coated on both the third current collecting portion 1421 and the fourth current collecting portion 1521 without strictly limiting the conductive paste to the third current collecting portion 1421, thereby reducing precision requirements for the coating process.

In some embodiments, the thickness of the first external active material portion 1422 is equal to that of the third external active material portion 1523.

In some embodiments, the first external active material portion 1422, the second external active material portion 1522 and the third external active material portion 1523 are made of the same material, for example, the three portions are cured from the same active paste.

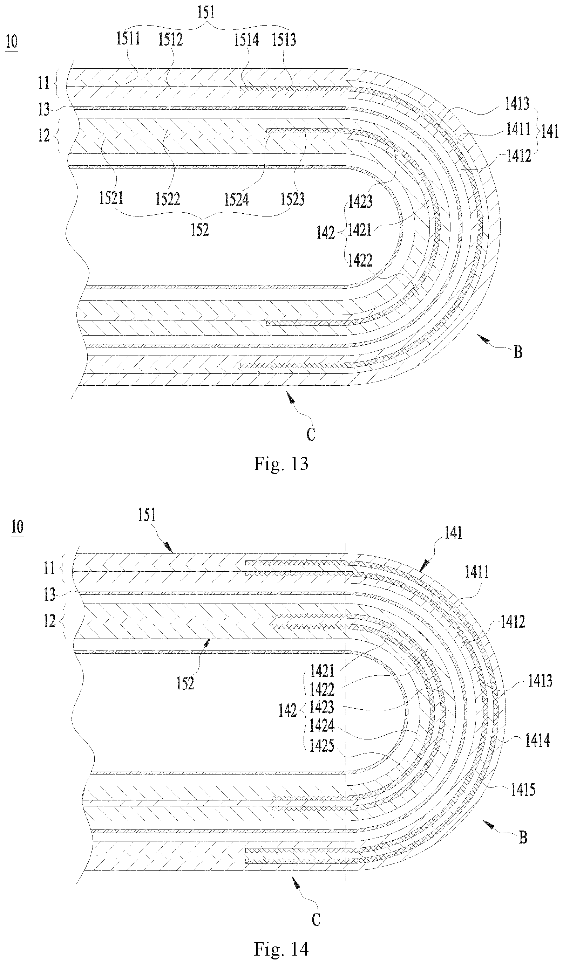

Fig. 13 is a local sectional view of an electrode assembly provided in some other embodiments of the application.

As shown in Fig. 13, in some embodiments, at least one of the bent portions of the positive pole piece 11 is a first bent portion 141, and at least one of the straight portions of the positive pole piece 11 is a first straight portion 151 connected to the first bent portion 141, the capacity of the active material per unit area inside the first bent portion 141 is lower than that of the active material per unit area inside the first straight portion 151; at least one of the bent portions of the negative pole piece 12 is a second bent portion 142, and at least one of the straight portions of the negative pole piece 12 is a second straight portion 152 connected to the second bent portion 142, the capacity of the active material per unit area outside the second bent portion 142 is higher than that of the active material per unit area outside the second straight portion 152.

In the embodiments of the application, the capacity of the active material per unit area inside the first bent portion 141 can be made lower than that of the active material per unit area inside the first straight portion 151 by, for example, adding the first conductive portion 1413 to the first bent portion 141. Similarly, the capacity of the active material per unit area outside the second bent portion 142 can be made higher than that of the active material per unit area outside the second straight portion 152 by making the thickness of the first external active material portion 1422 greater than that of the second external active material portion 1522, or by making the gram capacity of the active material of the first external active material portion 1422 higher than that of the active material of the second external active material portion 1522, or by adding a third conductive portion 1423 to the second bent portion 142, or by other means.

Exemplarily, in Fig. 13, the first bent portion 141 includes a first conductive portion 1413 connected between the first current collecting portion 1411 and the first internal active material portion 1412, and the second bent portion 142 includes a third conductive portion 1423 connected between the third current collecting portion 1421 and the first external active material portion 1422.

In some embodiments, the first bent portion 141 adjacent to the second bent portion 142 is arranged outside the second bent portion 142.

When the capacity of the active material per unit area inside the first straight portion 151 and the capacity of the active material per unit area outside the second straight portion 152 meet design requirements, the capacity of the active material per unit area inside the first bent portion 141 is lower than that of the active material per unit area inside the first straight portion 151, and the capacity of the active material per unit area outside the second bent portion 142 is higher than that of the active material per unit area outside the second straight portion 152, such that the CB value of the active material outside the second bent portion 142 can be increased, thus reducing the occurrence of lithium plating.

Fig. 14 is a local sectional view of an electrode assembly provided in some other embodiments of the application.

In some embodiments, at least one of the bent portions of the positive pole piece 11 is a first bent portion 141, and at least one of the straight portions of the positive pole piece 11 is a first straight portion 151 connected to the first bent portion 141, the capacity of the active material per unit area inside the first bent portion 141 is lower than that of the active material per unit area inside the first straight portion 151, and the capacity of the active material per unit area outside the first bent portion 141 is lower than that of the active material per unit area outside the first straight portion 151.

In some embodiments, the first bent portion 141 includes a sixth external active material portion 1414 located outside the first current collecting portion 1411, and a fifth conductive portion 1415 connected between the first current collecting portion 1411 and the sixth external active material portion 1414. According to the embodiments of the application, the capacity of the active material per unit area outside the first bent portion 141 is reduced by arranging the fifth conductive portion 1415.

In some embodiments, at least one of the bent portions of the negative pole piece 12 is a second bent portion 142, at least one of the straight portions of the negative pole piece 12 is a second straight portion 152 connected to the second bent portion 142, the capacity of the active material per unit area outside the second bent portion 142 is higher than that of the active material per unit area outside the second straight portion 152, and the capacity of the active material per unit area inside the second bent portion 142 is higher than that of the active material per unit area inside the second straight portion 152.

In some embodiments, the second bent portion 142 includes a sixth internal active material portion 1424 located inside the third current collecting portion 1421, and a sixth conductive portion 1425 connected between the third current collecting portion 1421 and the sixth internal active material portion 1424. According to the embodiments of the application, the capacity of the active material per unit area inside the second bent portion 142 is increased by arranging the sixth conductive portion 1425.

Test steps for the capacity and CB value of the active material per unit area are as follows:
Step 1). Testing an average discharge capacity of a single-sided positive active material layer. The positive pole piece of each embodiment is taken, and a small wafer containing the single-sided positive active material layer is obtained by using a punching die. A metal lithium sheet is used as a counter electrode, a Celgard film is used as a separator film, and an ethylene carbonate + dimethyl carbonate + diethyl carbonate (EC+DMC+DEC with a volume ratio of 1: 1:1) solution with dissolved LiPF6 (1mol/L) is used as an electrolyte, and six identical CR2430 button batteries are assembled in an argon-protected glove box. ① Letting stand for 12h after the battery is assembled; ②carrying out constant current charge at a 0.1C charging current until the voltage reaches an upper cut-off voltage x₁V, and keeping the voltage x₁V for constant voltage charging until the current reaches 50uA; ③letting stand for 5min; ④carrying out constant current discharge at a 0.1C discharging current until the voltage reaches a lower cut-off voltage y₁V; and ⑤letting stand for 5min, repeating steps 2-5 and recording the discharge capacity of the second cycle. An average value of discharge capacities of the six button batteries is an average discharge capacity of the single-sided positive active material layer. For example, when the positive active material is lithium iron phosphate (LFP), the upper cut-off voltage x₁V=3.75V and the lower cut-off voltage y₁V=2V. When the positive active material is a lithium nickel cobalt manganese oxide (NCM), the upper cut-off voltage x₁V=4.25V and the lower cut-off voltage y₁V=2.8V.
Step 2). Testing an average charge capacity of a single-sided negative active material layer. Taking the negative pole piece in the above embodiments to obtain a small wafer with the same area as the positive small wafer in the step 1) and including a negative single-sided membrane layer by using a punching die. The metal lithium sheet is used as the counter electrode, the Celgard film is used as the separator film, and the ethylene carbonate + dimethyl carbonate + diethyl carbonate (EC+DMC+DEC with a volume ratio of 1: 1:1) solution with dissolved LiPF6 (1mol/L) is used as the electrolyte, and the six CR2430 button batteries are assembled in the argon-protected glove box. ①Letting stand for 12h after the battery is assembled; ②carrying out constant current discharge at a 0.05C discharging current until the voltage reaches a lower cut-off voltage y₂mV; ③then carrying out constant current discharge at a 50uA discharging current until the voltage reaches a lower cut-off voltage y₂mV; ④letting stand for 5min; ⑤then carrying out constant current discharge at a 10uA discharging current until the voltage reaches a lower cut-off voltage y₂mV; ⑥letting stand for 5min; ⑦carrying out constant current charge at a 0.1C charging current finally until the final voltage reaches an upper cut-off voltage x₂V; and ⑧letting stand for 5min, repeating steps 2-8 and recording the charge capacity of the second cycle. The average charge capacity of the six button cells is the average charge capacity of the negative single-sided membrane layer. For example, when the negative active material is graphite, the upper cut-off voltage x₂V is 2V and the lower cut-off voltage y₂V is 5mV. When the negative active material is silicon, the upper cut-off voltage x₂V is 2V and the lower cut-off voltage y₂V is 5mV.
Step 3). Calculating a Cell Balance (CB) value according to an equation: CB value = the average charge capacity (mAh) of the single-sided negative active material layer /the average discharge capacity (mAh) of the single-sided positive active material layer.

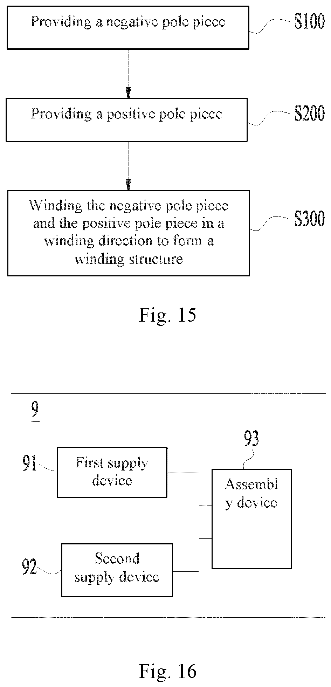

Fig. 15 is a schematic flow chart of a method for manufacturing an electrode assembly provided in some embodiments of the application.

As shown in Fig. 15, the method for manufacturing the electrode assembly includes:
S100. providing a negative pole piece;
S200. providing a positive pole piece; and
S300. winding the negative pole piece and the positive pole piece in a winding direction to form a winding structure.

The winding structure includes a bent area and a straight area connected to the bent area. Both the negative pole piece and the positive pole piece include a plurality of bent portions located in the bent area and a plurality of straight portions located in the straight area.

At least one of the bent portions of the positive pole piece is a first bent portion, and at least one of the straight portions of the positive pole piece is a first straight portion connected to the first bent portion, the capacity of an active material per unit area inside the first bent portion is lower than that of an active material per unit area inside the first straight portion; and/or at least one of the bent portions of the negative pole piece is a second bent portion, and at least one of the straight portions of the negative pole piece is a second straight portion connected to the second bent portion, the capacity of an active material per unit area outside the second bent portion is higher than that of an active material per unit area outside the second straight portion.

In some embodiments, the manufacturing method in the application further includes: providing a separator for separating the positive pole piece from the negative pole piece, and winding a first pole piece, the separator and a second pole piece in a winding direction to form a winding structure.

It should be noted that for related structures of the electrode assembly manufactured by the above manufacturing method, it may refer to the electrode assembly provided in the above embodiments.

When the electrode assembly is assembled on the basis of the above-described manufacturing method for the electrode assembly, it is not necessary to perform the above-described steps sequentially, that is, the steps may be performed in the order mentioned in the embodiments, may be performed in a different order from that mentioned in the embodiments, or may be performed simultaneously. For example, steps S100 and S200 may be performed in no particular order, and may be performed simultaneously.

Fig. 16 is a schematic block diagram of a system for manufacturing an electrode assembly provided in some embodiments of the application.

As shown in Fig. 16, the system 9 for manufacturing the electrode assembly according to the embodiments of the application includes: a first supply device 91, configured to supply a negative pole piece; a second supply device 92, configured to supply a positive pole piece; and an assembly device 93, configured to wind the negative pole piece and the positive pole piece in the winding direction to form a winding structure.

The winding structure includes a bent area and a straight area connected to the bent area. Both the negative pole piece and the positive pole piece include a plurality of bent portions located in the bent area and a plurality of straight portions located in the straight area.

At least one of the bent portions of the positive pole piece is a first bent portion, and at least one of the straight portions of the positive pole piece is a first straight portion connected to the first bent portion, the capacity of an active material per unit area inside the first bent portion is lower than that of an active material per unit area inside the first straight portion; and/or at least one of the bent portions of the negative pole piece is a second bent portion, and at least one of the straight portions of the negative pole piece is a second straight portion connected to the second bent portion, the capacity of an active material per unit area outside the second bent portion is higher than that of an active material per unit area outside the second straight portion.

In some embodiments, the manufacturing system further includes a third supply device (not shown) for supplying the separator film separating the positive pole piece from the negative pole piece. The assembly device is configured to wind the first pole piece, the separator and the second pole piece in a winding direction to form a winding structure.

For related structures of the electrode assembly manufactured by the above manufacturing system, it may refer to the electrode assembly provided in the above embodiments.

Finally, it should be noted that the above embodiments are merely used to describe the technical solution of the application, rather than limiting the same. Although the application has been described in detail with reference to the foregoing embodiments, those skilled in the art should understand that the technical solution described in the foregoing embodiments may still be modified within the scope of the appended set of claims.

## Claims

1. An electrode assembly (10), comprising a negative pole piece (12) and a positive pole piece (11), the negative pole piece (12) and the positive pole piece (11) being wound in a winding direction to form a winding structure comprising a bending region and a straight region connected to the bending region;
both the negative pole piece (12) and the positive pole piece (11) comprising a plurality of bent portions (14) located in the bending region and a plurality of straight portions (15) located in the straight region;
wherein
at least one of the bent portions (14) of the positive pole piece (11) is a first bent portion (141), and at least one of the straight portions (15) of the positive pole piece (15) is a first straight portion (151) connected to the first bent portion (141), the capacity of an active material per unit area inside the first bent portion (141) being lower than that of an active material per unit area inside the first straight portion (151); and at least one of the bent portions (14) of the negative pole piece (12) is a second bent portion (142), and at least one of the straight portions (15) of the negative pole piece (12) is a second straight portion (152) connected to the second bent portion (142), the capacity of an active material per unit area outside the second bent portion (142) being higher than that of an active material per unit area outside the second straight portion (152);
wherein the first bent portion (141) comprises a first current collecting portion (1411), a first internal active material portion (1412) arranged inside the first current collecting portion (1411) and a first conductive portion (1413) connected between the first current collecting portion (1411) and the first internal active material portion (1412); and
wherein the second bent portion (142) comprises a third current collecting portion (1421) and a first external active material portion (1422) arranged outside the third current collecting portion (1421), and the second straight portion (152) comprises a fourth current collecting portion (1521) and a second external active material portion (1522) arranged outside the fourth current collecting portion (1521),
wherein the second bent portion (142) comprises a third conductive portion (1423) connected between the third current collecting portion (1421) and the first external active material portion (1422), and the third conductive portion (1421) contains an active material;
the gram capacity of the active material of the third conductive portion (1423) is higher than that of the active material of the first external active material portion (1422); or the weight ratio of the active material of the third conductive portion (1423) to the third conductive portion (1423) is greater than that of the active material of the first external active material portion (1422) to the first external active material portion (1422);
wherein the capacity of the active material obtained by: ① letting stand for 12h after the battery is assembled; ② carrying out constant current charge at a 0.1C charging current until the voltage reaches an upper cut-off voltage, and keeping the voltage for constant voltage charging until the current reaches 50uA; ③ letting stand for 5min; (4) carrying out constant current discharge at a 0.1C discharging current until the voltage reaches a lower cut-off voltage; and ⑤ letting stand for 5min, repeating steps 2-5 and recording the discharge capacity of the second cycle; wherein the cut-off voltage is based on the active material used.

2. The electrode assembly (10) according to claim 1, wherein either the first bent portion (141) adjacent to the second bent portion (142) is arranged outside the second bent portion (142)..

3. The electrode assembly (10) according to any one of claims 1 to 2, wherein the first straight portion (151) comprises a second current collecting portion (1511) and a second internal active material portion (1512) arranged inside the second current collecting portion (1511); and the thickness of the second internal active material portion (1512) is greater than that of the first internal active material portion (1412),

4. The electrode assembly (10) according to claim 3, wherein the first straight portion (151) further comprises a third internal active material portion (1513) and a second conductive portion (1514), the third internal active material portion (1513) being arranged inside the second current collecting portion (1511), and the second conductive portion (1514) being connected between the second current collecting portion (1511) and the third internal active material portion (1513);
the second conductive portion (1514) being connected between the first conductive portion (1413) and the second internal active material portion (1512), and the third internal active material portion (1513) being connected between the first internal active material portion (1412) and the second internal active material portion (1512).

5. The electrode assembly (10) according to any one of claims 3 or 4, wherein the first conductive portion (1413) contains an active material;
the gram capacity of the active material of the first conductive portion (1413) is lower than that of the active material of the first internal active material portion (1412); or the weight ratio of the active material of the first conductive portion (1413) to the first conductive portion (1413) is less than that of the active material of the first internal active material portion (1412) to the first internal active material portion (1412).

6. The electrode assembly (10) according to any one of claims 1 to 5, wherein the first bent portion (141) adjacent to the second bent portion (142) is arranged outside the second bent portion (142).

7. The electrode assembly (10) according to claim 6, wherein the thickness of the first external active material portion (1422) is greater than that of the second external active material portion (1522).

8. The electrode assembly (10) according to claim 6, wherein
the gram capacity of an active material in the first external active material portion (1422) is higher than that of an active material in the second external active material portion (1522); or
the weight ratio of the active material of the first external active material portion (1422) to the first external active material portion (1422) is greater than that of an active material in the second external active material portion (1522) to the second external active material portion (1522).

9. The electrode assembly (10) according to any of claims 1 to 8, wherein the second straight portion (152) further comprises a third external active material portion (1523) and a fourth conductive portion (1524), the third external active material portion (1523) being arranged outside the fourth current collecting portion (1521), and the fourth conductive portion (1524) being connected between the fourth current collecting portion (1521) and the third external active material portion (1523); the fourth conductive portion (1524) being connected between the third conductive portion (1423) and the second external active material portion (1522), and the third external active material portion (1523) being connected between the first external active material portion (1422) and the second external active material portion (1522).

10. The electrode assembly (10) according to any one of claims 1 to 9, wherein at least one of the innermost bent portions (14) of the positive pole piece (11) is the first bent portion (141), and/or wherein at least one of the innermost bent portions (14) of the negative pole piece (12) is the second bent portion (142).

11. A battery cell (70), comprising a case and the electrode assembly (10) according to any one of claims 1 to 10, wherein the electrode assembly (10) is accommodated in the case.

12. A battery (2), comprising a box and the battery cell (7) according to claim 11, wherein the battery cell (7) is accommodated in the box.

13. An electric device, comprising the battery (2) according to claim 12, the battery (2) being configured to provide electrical energy.

14. A method for manufacturing an electrode assembly (10), comprising:
supplying a negative pole piece (12); and
supplying a positive pole piece (11);
winding the negative pole piece (12) and the positive pole piece (11) in the winding direction to form a winding structure; wherein
the winding structure comprises a bending region and a straight region connected to the bending region;
both the negative pole piece (12) and the positive pole piece (11) comprising a plurality of bent portions (14) located in the bending region and a plurality of straight portions (15) located in the straight region;
at least one of the bent portions (14) of the positive pole piece (11) is a first bent portion, and at least one of the straight portions (15) of the positive pole piece (11) is a first straight portion connected to the first bent portion, the capacity of an active material per unit area inside the first bent portion being lower than that of an active material per unit area inside the first straight portion; and at least one of the bent portions (15) of the negative pole piece (12) is a second bent portion, and at least one of the straight portions (15) of the negative pole piece (12) is a second straight portion connected to the second bent portion, the capacity of an active material per unit area outside the second bent portion being higher than that of an active material per unit area outside the second straight portion;
wherein the first bent portion (141) comprises a first current collecting portion (1411), a first internal active material portion (1412) arranged inside the first current collecting portion (1411) and a first conductive portion (1413) connected between the first current collecting portion (1411) and the first internal active material portion (1412); and
wherein the second bent portion (142) comprises a third current collecting portion (1421) and a first external active material portion (1422) arranged outside the third current collecting portion (1421), and the second straight portion (152) comprises a fourth current collecting portion (1521) and a second external active material portion (1522) arranged outside the fourth current collecting portion (1521),
wherein the second bent portion (142) comprises a third conductive portion (1423) connected between the third current collecting portion (1421) and the first external active material portion (1422), and the third conductive portion (1421) contains an active material,
the gram capacity of the active material of the third conductive portion (1423) is higher than that of the active material of the first external active material portion (1422); or the weight ratio of the active material of the third conductive portion (1423) to the third conductive portion (1423) is greater than that of the active material of the first external active material portion (1422) to the first external active material portion (1422);
wherein the second bent portion (142) comprises a third conductive portion (1423) connected between the third current collecting portion (1421) and the first external active material portion (1422), and the third conductive portion (1421) contains an active material;
wherein the capacity of the active material obtained by: ① letting stand for 12h after the battery is assembled; ② carrying out constant current charge at a 0.1C charging current until the voltage reaches an upper cut-off voltage, and keeping the voltage for constant voltage charging until the current reaches 50uA; ③ letting stand for 5min; ④ carrying out constant current discharge at a 0.1C discharging current until the voltage reaches a lower cut-off voltage; and (5) letting stand for 5min, repeating steps 2-5 and recording the discharge capacity of the second cycle; wherein the cut-off voltage is based on the active material used.

15. A system (9) for manufacturing an electrode assembly (10), comprising:
a first supply device (91), configured to supply a negative pole piece (12);
a second supply device (92), configured to supply a positive pole piece (11); and
an assembly device (93), configured to wind the negative pole piece (12) and the positive pole piece (11) in a winding direction to form a winding structure; wherein
the winding structure comprises a bending region and a straight region connected to the bending region;
both the negative pole piece (12) and the positive pole piece (11) comprising a plurality of bent portions (14) located in the bending region and a plurality of straight portions (15) located in the straight region;
at least one of the bent portions (14) of the positive pole piece (11) is a first bent portion (141), and at least one of the straight portions (15) of the positive pole piece (11) is a first straight portion (151) connected to the first bent portion (141), the capacity of an active material per unit area inside the first bent portion (141) being lower than that of an active material per unit area inside the first straight portion (151); and at least one of the bent portions (14) of the negative pole piece (11) is a second bent portion (142), and at least one of the straight portions (15) of the negative pole piece (11) is a second straight portion (152) connected to the second bent portion (142), the capacity of an active material per unit area outside the second bent portion (142) being higher than that of an active material per unit area outside the second straight portion (152);
wherein the first bent portion (141) comprises a first current collecting portion (1411), a first internal active material portion (1412) arranged inside the first current collecting portion (1411) and a first conductive portion (1413) connected between the first current collecting portion (1411) and the first internal active material portion (1412); and
wherein the second bent portion (142) comprises a third current collecting portion (1421) and a first external active material portion (1422) arranged outside the third current collecting portion (1421), and the second straight portion (152) comprises a fourth current collecting portion (1521) and a second external active material portion (1522) arranged outside the fourth current collecting portion (1521),
wherein the second bent portion (142) comprises a third conductive portion (1423) connected between the third current collecting portion (1421) and the first external active material portion (1422), and the third conductive portion (1421) contains an active material,
the gram capacity of the active material of the third conductive portion (1423) is higher than that of the active material of the first external active material portion (1422); or the weight ratio of the active material of the third conductive portion (1423) to the third conductive portion (1423) is greater than that of the active material of the first external active material portion (1422) to the first external active material portion (1422);
wherein the second bent portion (142) comprises a third conductive portion (1423) connected between the third current collecting portion (1421) and the first external active material portion (1422), and the third conductive portion (1421) contains an active material; wherein the capacity of the active material obtained by: ① letting stand for 12h after the battery is assembled; ② carrying out constant current charge at a 0.1C charging current until the voltage reaches an upper cut-off voltage, and keeping the voltage for constant voltage charging until the current reaches 50uA; ③ letting stand for 5min; ④ carrying out constant current discharge at a 0.1C discharging current until the voltage reaches a lower cut-off voltage; and ⑤ letting stand for 5min, repeating steps 2-5 and recording the discharge capacity of the second cycle; wherein the cut-off voltage is based on the active material used.

## Patentansprüche

1. Elektrodenanordnung (10), umfassend ein negatives Polstück (12) und ein positives Polstück (11), wobei das negative Polstück (12) und das positive Polstück (11) in einer Wicklungsrichtung gewickelt sind, um eine Wicklungsstruktur zu bilden, die eine Biegungsregion und eine gerade Region umfasst, die mit der Biegungsregion verbunden ist;
sowohl das negative Polstück (12) als auch das positive Polstück (11) eine Vielzahl von gebogenen Abschnitten (14), die sich in der Biegungsregion befinden, und eine Vielzahl von geraden Abschnitten (15), die sich in der geraden Region befinden, umfassen;
wobei
mindestens einer der gebogenen Abschnitte (14) des positiven Polstücks (11) ein erster gebogener Abschnitt (141) ist und mindestens einer der geraden Abschnitte (15) des positiven Polstücks (15) ein erster gerader Abschnitt (151) ist, der mit dem ersten gebogenen Abschnitt (141) verbunden ist, wobei die Kapazität eines Aktivmaterials pro Flächeneinheit innerhalb des ersten gebogenen Abschnitts (141) geringer ist als die eines Aktivmaterials pro Flächeneinheit innerhalb des ersten geraden Abschnitts (151); und mindestens einer der gebogenen Abschnitte (14) des negativen Polstücks (12) ein zweiter gebogener Abschnitt (142) ist und mindestens einer der geraden Abschnitte (15) des negativen Polstücks (12) ein zweiter gerader Abschnitt (152) ist, der mit dem zweiten gebogenen Abschnitt (142) verbunden ist, wobei die Kapazität eines Aktivmaterials pro Flächeneinheit außerhalb des zweiten gebogenen Abschnitts (142) höher ist als die eines Aktivmaterials pro Flächeneinheit außerhalb des zweiten geraden Abschnitts (152);
wobei der erste gebogene Abschnitt (141) einen ersten Stromsammelabschnitt (1411), einen ersten internen Aktivmaterialabschnitt (1412), der innerhalb des ersten Stromsammelabschnitts (1411) angeordnet ist, und einen ersten leitenden Abschnitt (1413) umfasst, der zwischen dem ersten Stromsammelabschnitt (1411) und dem ersten internen Aktivmaterialabschnitt (1412) verbunden ist; und
wobei der zweite gebogene Abschnitt (142) einen dritten Stromsammelabschnitt (1421) und einen ersten externen Aktivmaterialabschnitt (1422) umfasst, der außerhalb des dritten Stromsammelabschnitts (1421) angeordnet ist, und der zweite gerade Abschnitt (152) einen vierten Stromsammelabschnitt (1521) und einen zweiten externen Aktivmaterialabschnitt (1522) umfasst, der außerhalb des vierten Stromsammelabschnitts (1521) angeordnet ist,
wobei der zweite gebogene Abschnitt (142) einen dritten leitenden Abschnitt (1423) umfasst, der zwischen dem dritten Stromsammelabschnitt (1421) und dem ersten externen Aktivmaterialabschnitt (1422) verbunden ist, und der dritte leitende Abschnitt (1421) ein Aktivmaterial enthält;
die Grammkapazität des Aktivmaterials des dritten leitenden Abschnitts (1423) höher ist als die des Aktivmaterials des ersten externen Aktivmaterialabschnitts (1422); oder das Gewichtsverhältnis des Aktivmaterials des dritten leitenden Abschnitts (1423) zum dritten leitenden Abschnitt (1423) größer ist als das des Aktivmaterials des ersten externen Aktivmaterialabschnitts (1422) zum ersten externen Aktivmaterialabschnitt (1422);
wobei die Kapazität des Aktivmaterials erhalten wird durch: ① 12-stündiges Stehenlassen, nachdem die Batterie montiert wurde; ② Durchführen einer Konstantstromladung mit einem Ladestrom von 0,1C, bis die Spannung eine obere Abschaltspannung erreicht, und Halten der Spannung für eine Konstantspannungsladung, bis der Strom 50 uA erreicht; ③ 5-minütiges Stehenlassen; ④ Durchführen einer Konstantstromentladung mit einem Entladestrom von 0,1 C, bis die Spannung eine untere Abschaltspannung erreicht; und ⑤ 5-minütiges Stehenlassen, Wiederholen der Schritte 2 bis 5 und Aufzeichnen der Entladekapazität des zweiten Zyklus; wobei die Abschaltspannung auf dem verwendeten Aktivmaterial basiert.

2. Elektrodenanordnung (10) nach Anspruch 1, wobei entweder der erste gebogene Abschnitt (141) neben dem zweiten gebogenen Abschnitt (142) außerhalb des zweiten gebogenen Abschnitts (142) angeordnet ist..

3. Elektrodenanordnung (10) nach einem der Ansprüche 1 bis 2, wobei der erste gerade Abschnitt (151) einen zweiten Stromsammelabschnitt (1511) und einen zweiten internen Aktivmaterialabschnitt (1512) umfasst, der innerhalb des zweiten Stromsammelabschnitts (1511) angeordnet ist; und die Dicke des zweiten internen Aktivmaterialabschnitts (1512) größer ist als die des ersten internen Aktivmaterialabschnitts (1412),

4. Elektrodenanordnung (10) nach Anspruch 3, wobei der erste gerade Abschnitt (151) ferner einen dritten internen Aktivmaterialabschnitt (1513) und einen zweiten leitenden Abschnitt (1514) umfasst, wobei der dritte interne Aktivmaterialabschnitt (1513) innerhalb des zweiten Stromsammelabschnitts (1511) angeordnet ist und der zweite leitende Abschnitt (1514) zwischen dem zweiten Stromsammelabschnitt (1511) und dem dritten internen Aktivmaterialabschnitt (1513) verbunden ist;
der zweite leitende Abschnitt (1514) zwischen dem ersten leitenden Abschnitt (1413) und dem zweiten internen Aktivmaterialabschnitt (1512) verbunden ist und der dritte interne Aktivmaterialabschnitt (1513) zwischen dem ersten internen Aktivmaterialabschnitt (1412) und dem zweiten internen Aktivmaterialabschnitt (1512) verbunden ist.

5. Elektrodenanordnung (10) nach einem der Ansprüche 3 oder 4, wobei der erste leitende Abschnitt (1413) ein Aktivmaterial enthält;
die Grammkapazität des Aktivmaterials des ersten leitenden Abschnitts (1413) geringer ist als die des Aktivmaterials des ersten internen Aktivmaterialabschnitts (1412); oder das Gewichtsverhältnis des Aktivmaterials des ersten leitenden Abschnitts (1413) zum ersten leitenden Abschnitt (1413) kleiner ist als das des Aktivmaterials des ersten internen Aktivmaterialabschnitts (1412) zum ersten internen Aktivmaterialabschnitt (1412);

6. Elektrodenanordnung (10) nach einem der Ansprüche 1 bis 5, wobei der erste gebogene Abschnitt (141) neben dem zweiten gebogenen Abschnitt (142) außerhalb des zweiten gebogenen Abschnitts (142) angeordnet ist.

7. Elektrodenanordnung (10) nach Anspruch 6, wobei die Dicke des ersten externen Aktivmaterialabschnitts (1422) größer ist als die des zweiten externen Aktivmaterialabschnitts (1522).

8. Elektrodenanordnung (10) nach Anspruch 6, wobei
die Grammkapazität eines Aktivmaterials in dem ersten externen Aktivmaterialabschnitt (1422) höher ist als die eines Aktivmaterials in dem zweiten externen Aktivmaterialabschnitt (1522); oder
das Gewichtsverhältnis des Aktivmaterials des ersten externen Aktivmaterialabschnitts (1422) zum ersten externen Aktivmaterialabschnitt (1422) größer ist als das eines Aktivmaterials im zweiten externen Aktivmaterialabschnitt (1522) zum zweiten externen Aktivmaterialabschnitt (1522).

9. Elektrodenanordnung (10) nach einem der Ansprüche 1 bis 8, wobei der zweite gerade Abschnitt (152) ferner einen dritten externen Aktivmaterialabschnitt (1523) und einen vierten leitenden Abschnitt (1524) umfasst, wobei der dritte externe Aktivmaterialabschnitt (1523) außerhalb des vierten Stromsammelabschnitts (1521) angeordnet ist und der vierte leitende Abschnitt (1524) zwischen dem vierten Stromsammelabschnitt (1521) und dem dritten externen Aktivmaterialabschnitt (1523) verbunden ist; wobei der vierte leitende Abschnitt (1524) zwischen dem dritten leitenden Abschnitt (1423) und dem zweiten externen Aktivmaterialabschnitt (1522) verbunden ist und der dritte externe Aktivmaterialabschnitt (1523) zwischen dem ersten externen Aktivmaterialabschnitt (1422) und dem zweiten externen Aktivmaterialabschnitt (1522) verbunden ist.

10. Elektrodenanordnung (10) nach einem der Ansprüche 1 bis 9, wobei mindestens einer der innersten gebogenen Abschnitte (14) des positiven Polstücks (11) der erste gebogene Abschnitt (141) ist und/oder wobei mindestens einer der innersten gebogenen Abschnitte (14) des negativen Polstücks (12) der zweite gebogene Abschnitt (142) ist.

11. Batteriezelle (70), umfassend ein Gehäuse und die Elektrodenanordnung (10) nach einem der Ansprüche 1 bis 10, wobei die Elektrodenanordnung (10) in dem Gehäuse untergebracht ist.

12. Batterie (2), umfassend eine Box und die Batteriezelle (7) nach Anspruch 11, wobei die Batteriezelle (7) in der Box untergebracht ist.

13. Elektrische Vorrichtung, umfassend die Batterie (2) nach Anspruch 12, wobei die Batterie (2) so konfiguriert ist, dass sie elektrische Energie bereitstellt.

14. Verfahren zum Herstellen einer Elektrodenanordnung (10), umfassend:
Liefern eines negativen Polstücks (12); und
Liefern eines positiven Polstücks (11);
Wickeln des negativen Polstücks (12) und des positiven Polstücks (11) in der Wickelrichtung, um eine Wicklungsstruktur zu bilden; wobei
die Wicklungsstruktur eine Biegungsregion und eine gerade Region umfasst, die mit der Biegungsregion verbunden ist;
sowohl das negative Polstück (12) als auch das positive Polstück (11) eine Vielzahl von gebogenen Abschnitten (14), die sich in der Biegungsregion befinden, und eine Vielzahl von geraden Abschnitten (15), die sich in der geraden Region befinden, umfassen;
mindestens einer der gebogenen Abschnitte (14) des positiven Polstücks (11) ein erster gebogener Abschnitt ist und mindestens einer der geraden Abschnitte (15) des positiven Polstücks (11) ein erster gerader Abschnitt ist, der mit dem ersten gebogenen Abschnitt verbunden ist, wobei die Kapazität eines Aktivmaterials pro Flächeneinheit innerhalb des ersten gebogenen Abschnitts geringer ist als die eines Aktivmaterials pro Flächeneinheit innerhalb des ersten geraden Abschnitts; und mindestens einer der gebogenen Abschnitte (15) des negativen Polstücks (12) ein zweiter gebogener Abschnitt ist und mindestens einer der geraden Abschnitte (15) des negativen Polstücks (12) ein zweiter gerader Abschnitt ist, der mit dem zweiten gebogenen Abschnitt verbunden ist, wobei die Kapazität eines Aktivmaterials pro Flächeneinheit außerhalb des zweiten gebogenen Abschnitts höher ist als die eines Aktivmaterials pro Flächeneinheit außerhalb des zweiten geraden Abschnitts;
wobei der erste gebogene Abschnitt (141) einen ersten Stromsammelabschnitt (1411), einen ersten internen Aktivmaterialabschnitt (1412), der innerhalb des ersten Stromsammelabschnitts (1411) angeordnet ist, und einen ersten leitenden Abschnitt (1413) umfasst, der zwischen dem ersten Stromsammelabschnitt (1411) und dem ersten internen Aktivmaterialabschnitt (1412) verbunden ist; und
wobei der zweite gebogene Abschnitt (142) einen dritten Stromsammelabschnitt (1421) und einen ersten externen Aktivmaterialabschnitt (1422) umfasst, der außerhalb des dritten Stromsammelabschnitts (1421) angeordnet ist, und der zweite gerade Abschnitt (152) einen vierten Stromsammelabschnitt (1521) und einen zweiten externen Aktivmaterialabschnitt (1522) umfasst, der außerhalb des vierten Stromsammelabschnitts (1521) angeordnet ist,
wobei der zweite gebogene Abschnitt (142) einen dritten leitenden Abschnitt (1423) umfasst, der zwischen dem dritten Stromsammelabschnitt (1421) und dem ersten externen Aktivmaterialabschnitt (1422) verbunden ist, und der dritte leitende Abschnitt (1421) ein Aktivmaterial enthält,
die Grammkapazität des Aktivmaterials des dritten leitenden Abschnitts (1423) höher ist als die des Aktivmaterials des ersten externen Aktivmaterialabschnitts (1422); oder das Gewichtsverhältnis des Aktivmaterials des dritten leitenden Abschnitts (1423) zum dritten leitenden Abschnitt (1423) größer ist als das des Aktivmaterials des ersten externen Aktivmaterialabschnitts (1422) zum ersten externen Aktivmaterialabschnitt (1422);
wobei der zweite gebogene Abschnitt (142) einen dritten leitenden Abschnitt (1423) umfasst, der zwischen dem dritten Stromsammelabschnitt (1421) und dem ersten externen Aktivmaterialabschnitt (1422) verbunden ist, und der dritte leitende Abschnitt (1421) ein Aktivmaterial enthält;
wobei die Kapazität des Aktivmaterials erhalten wird durch: ① 12-stündiges Stehenlassen, nachdem die Batterie montiert wurde; ② Durchführen einer Konstantstromladung mit einem Ladestrom von 0,1 C, bis die Spannung eine obere Abschaltspannung erreicht, und Halten der Spannung für eine Konstantspannungsladung, bis der Strom 50 uA erreicht; ③ 5-minütiges Stehenlassen; ④ Durchführen einer Konstantstromentladung mit einem Entladestrom von 0,1 C, bis die Spannung eine untere Abschaltspannung erreicht; und ⑤ 5-minütiges Stehenlassen, Wiederholen der Schritte 2 bis 5 und Aufzeichnen der Entladekapazität des zweiten Zyklus; wobei die Abschaltspannung auf dem verwendeten Aktivmaterial basiert.

15. System (9) zum Herstellen einer Elektrodenanordnung (10), umfassend:
eine erste Liefervorrichtung (91), die so konfiguriert ist, dass sie ein negatives Polstück (12) liefert;
eine zweite Liefervorrichtung (92), die so konfiguriert ist, dass sie ein positives Polstück (11) liefert; und
eine Montagevorrichtung (93), die so konfiguriert ist, dass sie das negative Polstück (12) und das positive Polstück (11) in einer Wickelrichtung wickelt, um eine Wicklungsstruktur zu bilden; wobei
die Wicklungsstruktur eine Biegungsregion und eine gerade Region umfasst, die mit der Biegungsregion verbunden ist;
sowohl das negative Polstück (12) als auch das positive Polstück (11) eine Vielzahl von gebogenen Abschnitten (14), die sich in der Biegungsregion befinden, und eine Vielzahl von geraden Abschnitten (15), die sich in der geraden Region befinden, umfassen;
mindestens einer der gebogenen Abschnitte (14) des positiven Polstücks (11) ein erster gebogener Abschnitt (141) ist und mindestens einer der geraden Abschnitte (15) des positiven Polstücks (11) ein erster gerader Abschnitt (151) ist, der mit dem ersten gebogenen Abschnitt (141) verbunden ist, wobei die Kapazität eines Aktivmaterials pro Flächeneinheit innerhalb des ersten gebogenen Abschnitts (141) geringer ist als die eines Aktivmaterials pro Flächeneinheit innerhalb des ersten geraden Abschnitts (151); und mindestens einer der gebogenen Abschnitte (14) des negativen Polstücks (11) ein zweiter gebogener Abschnitt (142) ist und mindestens einer der geraden Abschnitte (15) des negativen Polstücks (11) ein zweiter gerader Abschnitt (152) ist, der mit dem zweiten gebogenen Abschnitt (142) verbunden ist, wobei die Kapazität eines Aktivmaterials pro Flächeneinheit außerhalb des zweiten gebogenen Abschnitts (142) höher ist als die eines Aktivmaterials pro Flächeneinheit außerhalb des zweiten geraden Abschnitts (152);
wobei der erste gebogene Abschnitt (141) einen ersten Stromsammelabschnitt (1411), einen ersten internen Aktivmaterialabschnitt (1412), der innerhalb des ersten Stromsammelabschnitts (1411) angeordnet ist, und einen ersten leitenden Abschnitt (1413) umfasst, der zwischen dem ersten Stromsammelabschnitt (1411) und dem ersten internen Aktivmaterialabschnitt (1412) verbunden ist; und
wobei der zweite gebogene Abschnitt (142) einen dritten Stromsammelabschnitt (1421) und einen ersten externen Aktivmaterialabschnitt (1422) umfasst, der außerhalb des dritten Stromsammelabschnitts (1421) angeordnet ist, und der zweite gerade Abschnitt (152) einen vierten Stromsammelabschnitt (1521) und einen zweiten externen Aktivmaterialabschnitt (1522) umfasst, der außerhalb des vierten Stromsammelabschnitts (1521) angeordnet ist,
wobei der zweite gebogene Abschnitt (142) einen dritten leitenden Abschnitt (1423) umfasst, der zwischen dem dritten Stromsammelabschnitt (1421) und dem ersten externen Aktivmaterialabschnitt (1422) verbunden ist, und der dritte leitende Abschnitt (1421) ein Aktivmaterial enthält,
die Grammkapazität des Aktivmaterials des dritten leitenden Abschnitts (1423) höher ist als die des Aktivmaterials des ersten externen Aktivmaterialabschnitts (1422); oder das Gewichtsverhältnis des Aktivmaterials des dritten leitenden Abschnitts (1423) zum dritten leitenden Abschnitt (1423) größer ist als das des Aktivmaterials des ersten externen Aktivmaterialabschnitts (1422) zum ersten externen Aktivmaterialabschnitt (1422);
wobei der zweite gebogene Abschnitt (142) einen dritten leitenden Abschnitt (1423) umfasst, der zwischen dem dritten Stromsammelabschnitt (1421) und dem ersten externen Aktivmaterialabschnitt (1422) verbunden ist, und der dritte leitende Abschnitt (1421) ein Aktivmaterial enthält; wobei die Kapazität des Aktivmaterials erhalten wird durch: ① 12-stündiges Stehenlassen, nachdem die Batterie montiert wurde; ② Durchführen einer Konstantstromladung mit einem Ladestrom von 0,1 C, bis die Spannung eine obere Abschaltspannung erreicht, und Halten der Spannung für eine Konstantspannungsladung, bis der Strom 50 uA erreicht; ③ 5-minütiges Stehenlassen; ④ Durchführen einer Konstantstromentladung mit einem Entladestrom von 0,1 C, bis die Spannung eine untere Abschaltspannung erreicht; und ⑤ 5-minütiges Stehenlassen, Wiederholen der Schritte 2 bis 5 und Aufzeichnen der Entladekapazität des zweiten Zyklus; wobei die Abschaltspannung auf dem verwendeten Aktivmaterial basiert.

## Revendications

1. Ensemble électrode (10), comprenant une pièce de pôle négatif (12) et une pièce de pôle positif (11), la pièce de pôle négatif (12) et la pièce de pôle positif (11) étant enroulées dans une direction d'enroulement pour former une structure d'enroulement comprenant une région coudée et une région rectiligne reliée à la région coudée ;
la pièce de pôle négatif (12) et la pièce de pôle positif (11) comprenant toutes deux une pluralité de parties coudées (14) situées dans la région coudée et une pluralité de parties rectilignes (15) situées dans la région rectiligne ;
dans lequel
au moins une des parties coudées (14) de la pièce de pôle positif (11) est une première partie coudée (141), et au moins une des parties rectilignes (15) de la pièce de pôle positif (15) est une première partie rectiligne (151) reliée à la première partie coudée (141), la capacité d'un matériau actif par unité de surface à l'intérieur de la première partie coudée (141) étant inférieure à celle d'un matériau actif par unité de surface à l'intérieur de la première partie rectiligne (151) ; et au moins une des parties coudées (14) de la pièce de pôle négatif (12) est une deuxième partie coudée (142), et au moins une des parties rectilignes (15) de la pièce de pôle négatif (12) est une deuxième partie rectiligne (152) reliée à la deuxième partie coudée (142), la capacité d'un matériau actif par unité de surface à l'extérieur de la deuxième partie coudée (142) étant supérieure à celle d'un matériau actif par unité de surface à l'extérieur de la deuxième partie rectiligne (152) ;
dans lequel la première partie coudée (141) comprend une première partie collectrice de courant (1411), une première partie de matériau actif interne (1412) agencée à l'intérieur de la première partie collectrice de courant (1411) et une première partie conductrice (1413) reliée entre la première partie collectrice de courant (1411) et la première partie de matériau actif interne (1412) ; et
dans lequel la deuxième partie coudée (142) comprend une troisième partie collectrice de courant (1421) et une première partie de matériau actif externe (1422) agencée à l'extérieur de la troisième partie collectrice de courant (1421), et la deuxième partie rectiligne (152) comprend une quatrième partie collectrice de courant (1521) et une deuxième partie de matériau actif externe (1522) agencée à l'extérieur de la quatrième partie collectrice de courant (1521),
dans lequel la deuxième partie coudée (142) comprend une troisième partie conductrice (1423) reliée entre la troisième partie collectrice de courant (1421) et la première partie de matériau actif externe (1422), et la troisième partie conductrice (1421) contient un matériau actif ;
la capacité massique du matériau actif de la troisième partie conductrice (1423) est supérieure à celle du matériau actif de la première partie de matériau actif externe (1422) ; ou le rapport pondéral du matériau actif de la troisième partie conductrice (1423) à la troisième partie conductrice (1423) est supérieur à celui du matériau actif de la première partie de matériau actif externe (1422) à la première partie de matériau actif externe (1422) ;
dans lequel la capacité du matériau actif est obtenue à travers les étapes suivantes consistant à : ① laisser reposer pendant 12 h après l'assemblage de la batterie ; ② réaliser une charge à courant constant à un courant de charge de 0,1 C jusqu'à ce que la tension atteigne une tension de coupure supérieure, et maintenir la tension pour une charge à tension constante jusqu'à ce que le courant atteigne 50 uA ; ③ laisser reposer pendant 5 min ; ④ réaliser une décharge à courant constant à un courant de décharge de 0,1 C jusqu'à ce que la tension atteigne une tension de coupure inférieure ; et ⑤ laisser reposer pendant 5 min, répéter les étapes 2 à 5 et consigner la capacité de décharge du deuxième cycle ; la tension de coupure étant basée sur le matériau actif utilisé.

2. Ensemble électrode (10) selon la revendication 1, dans lequel soit
la première partie coudée (141) adjacente à la deuxième partie coudée (142) est agencée à l'extérieur de la deuxième partie coudée (142).

3. Ensemble électrode (10) selon l'une quelconque des revendications 1 à 2, dans lequel la première partie rectiligne (151) comprend une deuxième partie collectrice de courant (1511) et une deuxième partie de matériau actif interne (1512) agencée à l'intérieur de la deuxième partie collectrice de courant (1511) ; et l'épaisseur de la deuxième partie de matériau actif interne (1512) est supérieure à celle de la première partie de matériau actif interne (1412).

4. Ensemble électrode (10) selon la revendication 3, dans lequel la première partie rectiligne (151) comprend en outre une troisième partie de matériau actif interne (1513) et une deuxième partie conductrice (1514), la troisième partie de matériau actif interne (1513) étant agencée à l'intérieur de la deuxième partie collectrice de courant (1511), et la deuxième partie conductrice (1514) étant reliée entre la deuxième partie collectrice de courant (1511) et la troisième partie de matériau actif interne (1513) ;
la deuxième partie conductrice (1514) étant reliée entre la première partie conductrice (1413) et la deuxième partie de matériau actif interne (1512), et la troisième partie de matériau actif interne (1513) étant reliée entre la première partie de matériau actif interne (1412) et la deuxième partie de matériau actif interne (1512).

5. Ensemble électrode (10) selon l'une quelconque des revendications 3 ou 4, dans lequel la première partie conductrice (1413) contient un matériau actif ;
la capacité massique du matériau actif de la première partie conductrice (1413) est inférieure à celle du matériau actif de la première partie de matériau actif interne (1412) ; ou le rapport pondéral du matériau actif de la première partie conductrice (1413) à la première partie conductrice (1413) est inférieur à celui du matériau actif de la première partie de matériau actif interne (1412) à la première partie de matériau actif interne (1412).

6. Ensemble électrode (10) selon l'une quelconque des revendications 1 à 5, dans lequel la première partie coudée (141) adjacente à la deuxième partie coudée (142) est agencée à l'extérieur de la deuxième partie coudée (142).

7. Ensemble électrode (10) selon la revendication 6, dans lequel l'épaisseur de la première partie de matériau actif externe (1422) est supérieure à celle de la deuxième partie de matériau actif externe (1522).

8. Ensemble électrode (10) selon la revendication 6, dans lequel
la capacité massique d'un matériau actif dans la première partie de matériau actif externe (1422) est supérieure à celle d'un matériau actif dans la deuxième partie de matériau actif externe (1522) ; ou
le rapport pondéral du matériau actif de la première partie de matériau actif externe (1422) à la première partie de matériau actif externe (1422) est supérieur à celui d'un matériau actif dans la deuxième partie de matériau actif externe (1522) à la deuxième partie de matériau actif externe (1522).

9. Ensemble électrode (10) selon l'une quelconque des revendications 1 à 8, dans lequel la deuxième partie rectiligne (152) comprend en outre une troisième partie de matériau actif externe (1523) et une quatrième partie conductrice (1524), la troisième partie de matériau actif externe (1523) étant agencée à l'extérieur de la quatrième partie collectrice de courant (1521), et la quatrième partie conductrice (1524) étant reliée entre la quatrième partie collectrice de courant (1521) et la troisième partie de matériau actif externe (1523) ; la quatrième partie conductrice (1524) étant reliée entre la troisième partie conductrice (1423) et la deuxième partie de matériau actif externe (1522), et la troisième partie de matériau actif externe (1523) étant reliée entre la première partie de matériau actif externe (1422) et la deuxième partie de matériau actif externe (1522).

10. Ensemble électrode (10) selon l'une quelconque des revendications 1 à 9, dans lequel au moins une des parties coudées (14) les plus à l'intérieur de la pièce de pôle positif (11) est la première partie coudée (141), et/ou dans lequel au moins une des parties coudées (14) les plus à l'intérieur de la pièce de pôle négatif (12) est la deuxième partie coudée (142).

11. Cellule de batterie (70), comprenant un boîtier et l'ensemble électrode (10) selon l'une quelconque des revendications 1 à 10, dans laquelle l'ensemble électrode (10) est logé dans le boîtier.

12. Batterie (2) comprenant une boîte et la cellule de batterie (7) selon la revendication 11, dans laquelle la cellule de batterie (7) est logée dans la boîte.

13. Dispositif électrique, comprenant la batterie (2) selon la revendication 12, la batterie (2) étant conçue pour fournir de l'énergie électrique.

14. Procédé de fabrication d'un ensemble électrode (10) comprenant les étapes consistant à :
fournir une pièce de pôle négatif (12) ; et
fournir une pièce de pôle positif (11) ;
enrouler la pièce de pôle négatif (12) et la pièce de pôle positif (11) dans la direction d'enroulement pour former une structure d'enroulement ; dans lequel
la structure d'enroulement comprend une région coudée et une région rectiligne reliée à la région coudée ;
la pièce de pôle négatif (12) et la pièce de pôle positif (11) comprenant toutes deux une pluralité de parties coudées (14) situées dans la région coudée et une pluralité de parties rectilignes (15) situées dans la région rectiligne ;
au moins une des parties coudées (14) de la pièce de pôle positif (11) est une première partie coudée, et au moins une des parties rectilignes (15) de la pièce de pôle positif (11) est une première partie rectiligne reliée à la première partie coudée, la capacité d'un matériau actif par unité de surface à l'intérieur de la première partie coudée étant inférieure à celle d'un matériau actif par unité de surface à l'intérieur de la première partie rectiligne ; et au moins une des parties coudées (15) de la pièce de pôle négatif (12) est une deuxième partie coudée, et au moins une des parties rectilignes (15) de la pièce de pôle négatif (12) est une deuxième partie rectiligne reliée à la deuxième partie coudée, la capacité d'un matériau actif par unité de surface à l'extérieur de la deuxième partie coudée étant supérieure à celle d'un matériau actif par unité de surface à l'extérieur de la deuxième partie rectiligne ;
dans lequel la première partie coudée (141) comprend une première partie collectrice de courant (1411), une première partie de matériau actif interne (1412) agencée à l'intérieur de la première partie collectrice de courant (1411) et une première partie conductrice (1413) reliée entre la première partie collectrice de courant (1411) et la première partie de matériau actif interne (1412) ; et
dans lequel la deuxième partie coudée (142) comprend une troisième partie collectrice de courant (1421) et une première partie de matériau actif externe (1422) agencée à l'extérieur de la troisième partie collectrice de courant (1421), et la deuxième partie rectiligne (152) comprend une quatrième partie collectrice de courant (1521) et une deuxième partie de matériau actif externe (1522) agencée à l'extérieur de la quatrième partie collectrice de courant (1521),
dans lequel la deuxième partie coudée (142) comprend une troisième partie conductrice (1423) reliée entre la troisième partie collectrice de courant (1421) et la première partie de matériau actif externe (1422), et la troisième partie conductrice (1421) contient un matériau actif,
la capacité massique du matériau actif de la troisième partie conductrice (1423) est supérieure à celle du matériau actif de la première partie de matériau actif externe (1422) ; ou le rapport pondéral du matériau actif de la troisième partie conductrice (1423) à la troisième partie conductrice (1423) est supérieur à celui du matériau actif de la première partie de matériau actif externe (1422) à la première partie de matériau actif externe (1422) ;
dans lequel la deuxième partie coudée (142) comprend une troisième partie conductrice (1423) reliée entre la troisième partie collectrice de courant (1421) et la première partie de matériau actif externe (1422), et la troisième partie conductrice (1421) contient un matériau actif ;
dans lequel la capacité du matériau actif est obtenue à travers les étapes suivantes consistant à : ① laisser reposer pendant 12 h après l'assemblage de la batterie ; ② réaliser une charge à courant constant à un courant de charge de 0,1 C jusqu'à ce que la tension atteigne une tension de coupure supérieure, et maintenir la tension pour une charge à tension constante jusqu'à ce que le courant atteigne 50 uA ; ③ laisser reposer pendant 5 min ; ④ réaliser une décharge à courant constant à un courant de décharge de 0,1 C jusqu'à ce que la tension atteigne une tension de coupure inférieure ; et ⑤ laisser reposer pendant 5 min, répéter les étapes 2 à 5 et consigner la capacité de décharge du deuxième cycle ; la tension de coupure étant basée sur le matériau actif utilisé.

15. Système (9) de fabrication d'un ensemble électrode (10), comprenant :
un premier dispositif de fourniture (91), conçu pour fournir une pièce de pôle négatif (12) ;
un deuxième dispositif de fourniture (92), conçu pour fournir une pièce de pôle positif (11) ; et
un dispositif d'assemblage (93), conçu pour enrouler la pièce de pôle négatif (12) et la pièce de pôle positif (11) dans une direction d'enroulement pour former une structure d'enroulement ; dans lequel
la structure d'enroulement comprend une région coudée et une région rectiligne reliée à la région coudée ;
la pièce de pôle négatif (12) et la pièce de pôle positif (11) comprenant toutes deux une pluralité de parties coudées (14) situées dans la région coudée et une pluralité de parties rectilignes (15) situées dans la région rectiligne ;
au moins une des parties coudées (14) de la pièce de pôle positif (11) est une première partie coudée (141), et au moins une des parties rectilignes (15) de la pièce de pôle positif (11) est une première partie rectiligne (151) reliée à la première partie coudée (141), la capacité d'un matériau actif par unité de surface à l'intérieur de la première partie coudée (141) étant inférieure à celle d'un matériau actif par unité de surface à l'intérieur de la première partie rectiligne (151) ; et au moins une des parties coudées (14) de la pièce de pôle négatif (11) est une deuxième partie coudée (142), et au moins une des parties rectilignes (15) de la pièce de pôle négatif (11) est une deuxième partie rectiligne (152) reliée à la deuxième partie coudée (142), la capacité d'un matériau actif par unité de surface à l'extérieur de la deuxième partie coudée (142) étant supérieure à celle d'un matériau actif par unité de surface à l'extérieur de la deuxième partie rectiligne (152) ;
dans lequel la première partie coudée (141) comprend une première partie collectrice de courant (1411), une première partie de matériau actif interne (1412) agencée à l'intérieur de la première partie collectrice de courant (1411) et une première partie conductrice (1413) reliée entre la première partie collectrice de courant (1411) et la première partie de matériau actif interne (1412) ; et
dans lequel la deuxième partie coudée (142) comprend une troisième partie collectrice de courant (1421) et une première partie de matériau actif externe (1422) agencée à l'extérieur de la troisième partie collectrice de courant (1421), et la deuxième partie rectiligne (152) comprend une quatrième partie collectrice de courant (1521) et une deuxième partie de matériau actif externe (1522) agencée à l'extérieur de la quatrième partie collectrice de courant (1521),
dans lequel la deuxième partie coudée (142) comprend une troisième partie conductrice (1423) reliée entre la troisième partie collectrice de courant (1421) et la première partie de matériau actif externe (1422), et la troisième partie conductrice (1421) contient un matériau actif,
la capacité massique du matériau actif de la troisième partie conductrice (1423) est supérieure à celle du matériau actif de la première partie de matériau actif externe (1422) ; ou le rapport pondéral du matériau actif de la troisième partie conductrice (1423) à la troisième partie conductrice (1423) est supérieur à celui du matériau actif de la première partie de matériau actif externe (1422) à la première partie de matériau actif externe (1422) ;
dans lequel la deuxième partie coudée (142) comprend une troisième partie conductrice (1423) reliée entre la troisième partie collectrice de courant (1421) et la première partie de matériau actif externe (1422), et la troisième partie conductrice (1421) contient un matériau actif ; dans lequel la capacité du matériau actif est obtenue à travers les étapes suivantes : ① laisser reposer pendant 12 h après l'assemblage de la batterie ; ② réaliser une charge à courant constant à un courant de charge de 0,1 C jusqu'à ce que la tension atteigne une tension de coupure supérieure, et maintenir la tension pour une charge à tension constante jusqu'à ce que le courant atteigne 50 uA ; ③ laisser reposer pendant 5 min ; ④ réaliser une décharge à courant constant à un courant de décharge de 0,1 C jusqu'à ce que la tension atteigne une tension de coupure inférieure ; et ⑤ laisser reposer pendant 5 min, répéter les étapes 2 à 5 et consigner la capacité de décharge du deuxième cycle ; la tension de coupure étant basée sur le matériau actif utilisé.
